(19) **Europäisches Patentamt**

**European Patent Office**

**Office européen des brevets**

(11) **EP 1 515 468 A1**

(12) **EUROPEAN PATENT APPLICATION**
published in accordance with Art. 158(3) EPC

(43) Date of publication:
16.03.2005 Bulletin 2005/11

(51) Int Cl.$^7$: **H04J 11/00**

(21) Application number: 03733476.0

(86) International application number:
**PCT/JP2003/007707**

(22) Date of filing: 18.06.2003

(87) International publication number:
**WO 2004/002035 (31.12.2003 Gazette 2004/01)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 20.06.2002 JP 2002180204
07.01.2003 JP 2003001438

(71) Applicant: **MATSUSHITA ELECTRIC INDUSTRIAL CO., LTD.**
**Kadoma-shi, Osaka 571-8501 (JP)**

(72) Inventors:
• **UESUGI, Mitsuru**
**Yokosuka-shi, Kanagawa 238-0048 (JP)**
• **OTA, Eiji, c/o Tokyo Denpan Sekkei Inc.**
**Tokyo 145-0063 (JP)**

(74) Representative: **Grünecker, Kinkeldey, Stockmair & Schwanhäusser Anwaltssozietät**
**Maximilianstrasse 58**
**80538 München (DE)**

(54) **OFDM RECEIVING APPARATUS AND OFDM SIGNAL CORRECTING METHOD**

(57) A tap selection section 502 divides sampling signals r(i,0) through r(i,7) obtained from a received OFDM signal into sampling signals subject to correction and sampling signals not subject to correction, sends sampling signals subject to correction to an FIR filter 503, and sends sampling signals not subject to correction to an FTT 505. FIR filter 503 takes sampling signals as variable gain, and also has a Fourier transform known coefficient as input. An adaptive algorithm section 511 converges the values of sampling signals that include a distortion component comprising variable gain of FIR filter 503 to an optimal value so that error value e(i,k) due to distortion decreases.

FIG.8

**Description**

Technical Field

The present invention relates to a technology that corrects distortion of an OFDM signal on which peak clipping processing is executed in transmission, for example.

Background Art

In recent years, OFDM (Orthogonal Frequency Division Multiplexing) has been attracting attention as a method that enables high-speed communication to be implemented. OFDM is a kind of multicarrier transmission method whereby many subcarriers are transmitted arranged so as to be mutually orthogonal. With OFDM a long symbol length is possible thanks to the ability to handle many subcarriers efficiently, making this method resistant to the effects of delayed waves and synchronization drift. Consequently, there is thought to be a high possibility of OFDM, or OFDM-CDMA combining OFDM and CDMA (Code Division Multiple Access), being used as a future high-speed transmission method.

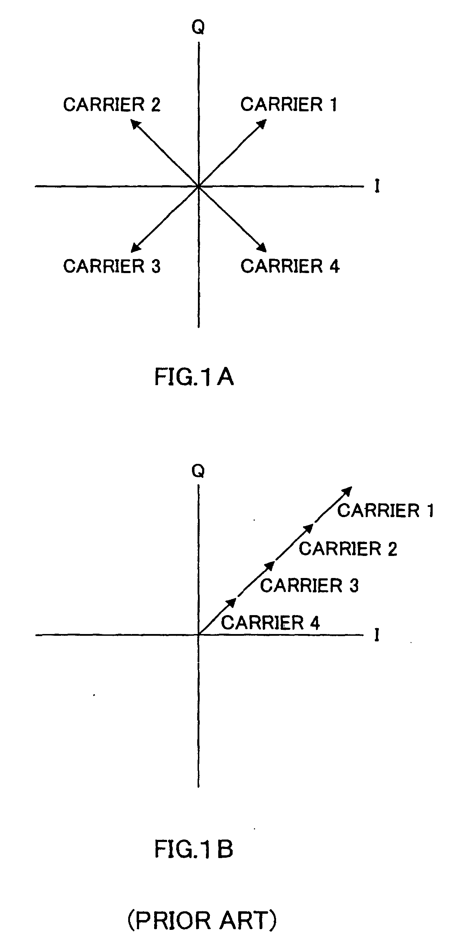

However, the use of many subcarriers in OFDM or OFDM-CDMA brings a problem of high peak power. This will be explained briefly using FIG. 1A and FIG. 1B. FIG. 1A and FIG.1B are conceptual representations of the spectrum of an OFDM modulated wave on complex coordinates, and illustrate a case where N (in the figures, N = 4) subcarriers are arranged equally spaced, and the power of all the subcarriers is the same.

Each subcarrier of an OFDM modulated wave undergoes modulation according to the phase and amplitude of a QAM signal, for example. FIG. 1A shows a case where the phases of four subcarriers 1 through 4 of an OFDM modulated wave are at 90 degree intervals. As the subcarrier frequencies are different, the subcarriers actually rotate at different angular frequencies, and FIG.1A shows observation at a predetermined time. In this case, subcarriers 1 through 4 cancel each other out, and the resultant vectors of subcarriers 1 through 4 are canceled, giving an amplitude of 0.

FIG.1B, on the other hand, shows a case where four subcarriers 1 through 4 are all aligned in the same phase. In this case, the resultant vectors of subcarriers 1 through 4 are added in the same phase, and therefore the resultant vector amplitude is 4 times that of one subcarrier. Thus, according to the data transmitted, the OFDM modulated wave subcarrier phases coincide and a large-amplitude peak occurs in the OFDM modulated wave.

Such large-amplitude peak power has an effect on the power amplifier. For example, if it is attempted to implement a power amplifier that can allow such large-amplitude peak power, the power amplifier configuration becomes complex and power consumption also increases. This also makes the configuration of circuitry such as A/D conversion circuits more complex. Moreover, if transmission is performed with large-amplitude peak power amplified directly, there is a basic problem of interference with other signals.

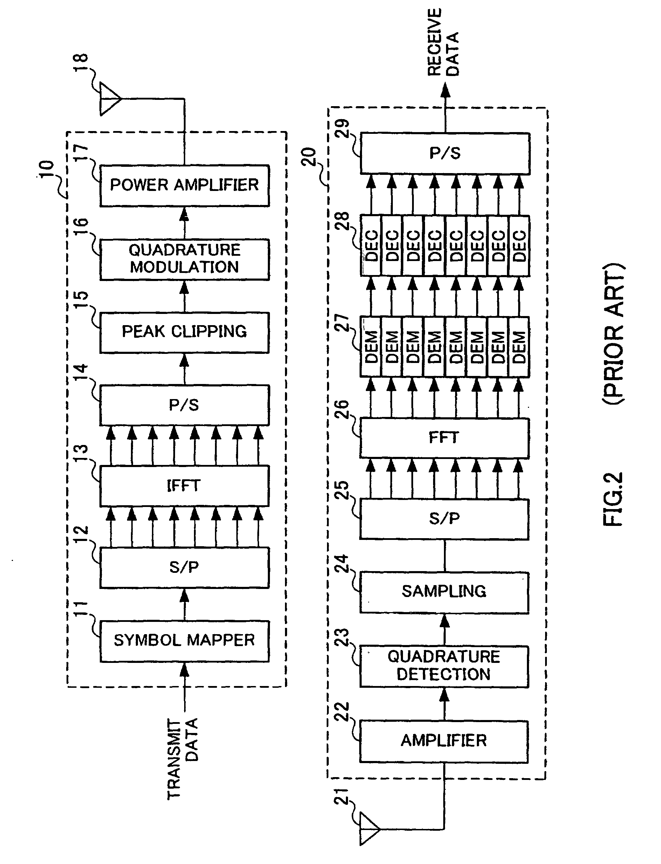

Heretofore, various methods have been proposed to solve these problems. The most practical of these methods is that known as peak clipping. The configuration of an OFDM transmission/reception system that uses peak clipping processing is shown in FIG.2. In transmitting apparatus 10, transmit data is converted by a symbol mapper 11 to a complex symbol sequence for modulating each carrier. Symbol mapper 11 is a section for converting multi-bit data to corresponding complex symbols, and has a configuration in accordance with the symbol modulation method.

A generated complex symbol sequence is accumulated in a serial/parallel conversion section (S/P) 12. N accumulated symbols are converted by an inverse fast Fourier transform section (IFFT) 13, and an OFDM symbol sample value is generated. The obtained sample value is converted to a time series signal by a parallel/serial conversion section (P/S) 14, and a complex baseband OFDM signal is generated. Next, if data instantaneous power exceeds a certain threshold value, it is clipped in a peak clipping section 15. Then transmitting apparatus 10 multiplies the real part of the complex baseband signal after peak clipping by the carrier by means of a quadrature modulation section 16, and forms a carrier band OFDM signal. The formed OFDM signal is amplified by a power amplifier 17, and then radiated from an antenna 18.

In receiving apparatus 20, a received signal received by an antenna 21 is amplified by an amplifier 22 and then input to a quadrature detection section 23. A signal that has undergone detection processing by quadrature detection section 23 is sampled by a sampling section 24, and a complex signal sequence is generated. N generated complex signal sequence samples are accumulated by a serial/parallel conversion section (S/P) 25. A fast Fourier transform section (FFT) 26 outputs a complex symbol sequence in which each carrier is modulated by executing fast Fourier transform processing on the N accumulated samples. Complex symbols for each carrier are demodulated by demodulation sections (DEM) 27, and are then subjected to a hard decision by decoding sections (DEC) 28, to become data bits. The data bits for each carrier are then converted to serial receive data by a parallel/serial conversion section (P/S) 29, and are output.

However, when peak clipping processing is executed on a transmit signal on the transmitting side as described above, the peak-clipped signal is naturally a distorted signal, and consequently the quality of the signal received on the receiving side degrades.

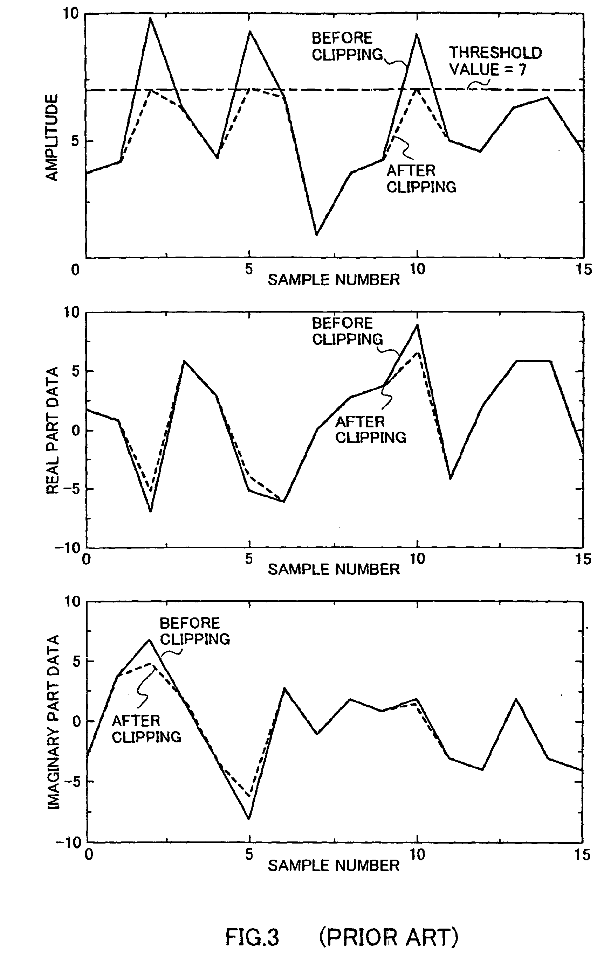

FIG.3 shows an example of a transmit waveform when peak clipping processing is executed on the transmitting side. In FIG.3, a solid line indicates an OFDM signal before peak clipping (example of 16 samples), and an example is shown in which peak clipping processing is carried out when the amplitude exceeds a threshold value of 7. In the case illustrated in this example, the 2nd, 5th, and 10th samples exceed the threshold value, and therefore these amplitude values are clipped so as to become 7. When this is done, real part and imaginary part data are as shown in the lower graphs, and data indicated by a dotted line differing from the data indicated by a solid line is received on the receiving side. Thus, the difference between the solid line and dotted line is distortion, and the reception quality degrades.

Here, a case has been described by way of example in which the reception quality of an OFDM signal on which peak clipping processing is executed on the transmitting side degrades, but since many data are transmitted by one OFDM symbol in OFDM communication, once noise is superimposed on an OFDM signal it is generally difficult to eliminate that noise accurately.

Disclosure of Invention

It is an object of the present invention to provide an OFDM receiving apparatus and OFDM signal correction method whereby, when an OFDM signal with distortion due to peak clipping processing or the like is received, for example, it is possible to correct that distortion, etc., satisfactorily, and obtain a good-quality received signal.

This object is achievedby giving a Fourier transform processing circuit an FIR filter configuration that takes a sampling signal sampled from a received OFDM signal as variable gain and also has as input a Fourier transform known coefficient, selecting a sampling signal subject to correction as FIR filter variable gain, and converging the value of that sampling signal to an optimal value by means of an adaptive algorithm so that distortion and a noise component decrease.

Brief Description of Drawings

FIG.1A is a drawing that provides an explanation of peak power in OFDM;

FIG.1B is a drawing that provides an explanation of peak power in OFDM;

FIG.2 is a block diagram showing the configuration of a general OFDM transmitting apparatus and OFDM receiving apparatus;

FIG.3 is a drawing that provides an explanation of a peak-clipped signal waveform;

FIG.4 is a drawing showing the general processing flow when an OFDM signal is demodulated and decoded;

FIG.5 is a drawing that provides an explanation of a case in which the FFT processing section is divided into two;

FIG.6 is a drawing showing an actual circuit configuration for performing Fourier transform processing on a sampling signal;

FIG.7 is a drawing showing the configuration of an FIR filter that performs the same processing as an FFT;

FIG.8 is a drawing showing the configuration of an OFDM signal correction section of an OFDM receiving apparatus of the present invention;

FIG. 9 is a drawing that provides an explanation of peak-clipped sampling signal estimation processing;

FIG.10 is a drawing that provides an explanation of peak clipping compensation operation of this embodiment;

FIG.11 is a block diagram showing the configuration of a tap selection section according to Embodiment 2;

FIG.12 is a drawing that provides an explanation of sampling signal correction operation according to an adaptive algorithm of Embodiment 3;

FIG.13 is a drawing that provides an explanation of sampling signal correction operation according to an adaptive algorithm of Embodiment 4;

FIG.14 is a drawing that provides an explanation of sampling signal correction operation according to an adaptive algorithm of Embodiment 5;

FIG.15 is a drawing showing an example of a peak-clipped OFDM symbol;

FIG.16 is a drawing showing an example of overlap of waveforms of three paths;

FIG.17 is a drawing showing the received waveform (waveform with three paths overlapping) in the case of three paths;

FIG.18 is a block diagram showing the configuration of an OFDM signal correction section of Embodiment 6;

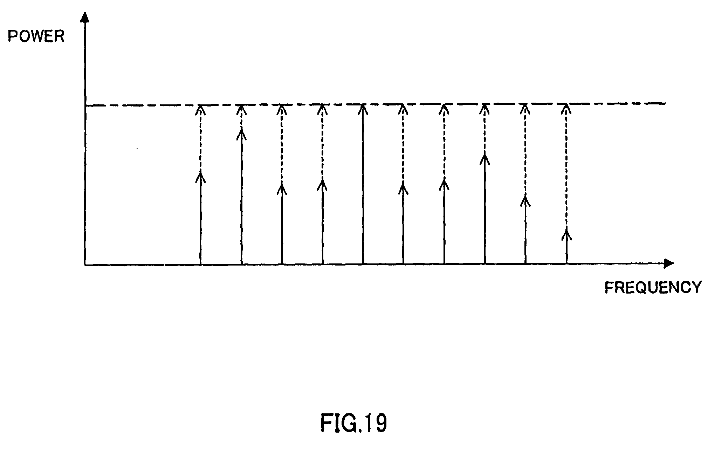

FIG.19 is a drawing that provides an explanation of frequency axis equalization;

FIG. 20 is a block diagram showing the configuration of an OFDM signal correction section of Embodiment 7;

FIG.21 is a block diagram showing the configuration of an OFDM signal correction section of another embodiment;

FIG.22 is a drawing that provides an explanation of a case in which an OFDM receiving apparatus of the present invention is used in elimination of interference by a signal of another user;

FIG.23 is a drawing that provides an explanation of a case in which an OFDM receiving apparatus of the present invention is used in elimination of interference between an inbound signal and outbound signal in TDD transmission/reception;

FIG.24 is a drawing that provides an explanation of a case in which an OFDM receiving apparatus of the present invention is used in elimination of impulse noise;

FIG.25 is a drawing that provides an explanation of a case in which an OFDM receiving apparatus of the present invention is used in elimination of white noise; and

FIG.26 is a drawing that provides an explanation of a case in which an OFDM receiving apparatus of the present invention is used in elimination of white noise.

Best Mode for Carrying out the Invention

With reference now to the accompanying drawings, embodiments of the present invention will be explained in detail below.

(Embodiment 1)

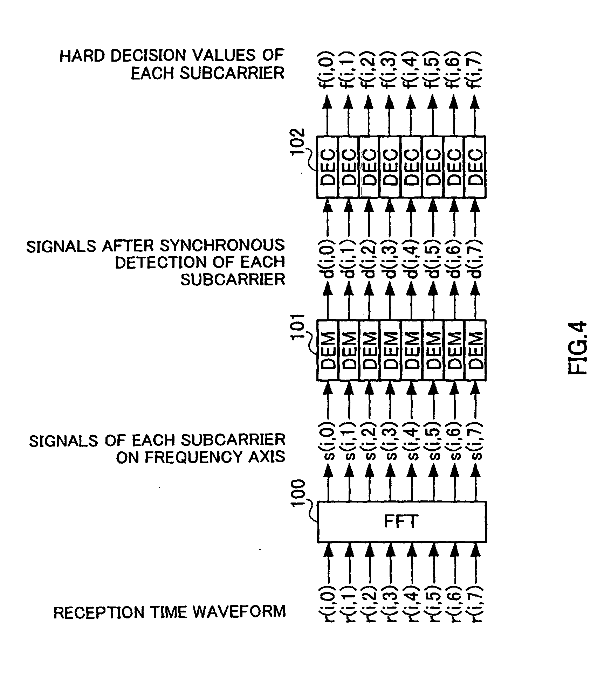

Before the configuration of this embodiment is described, the general flow when an OFDM signal is demodulated and decoded will first be described using FIG.4. Sampling signals r(i,j) input to FFT 100 in FIG.4 are received OFDM signal sampling signals output from a serial/parallel conversion section (S/P) 25 in FIG.2 described above.

In FIG.4, r(i, j) indicates the j'th sample received signal in the i'th OFDM symbol, s(i,k) indicates the k'th subcarrier signal after FTT in the i'th OFDM symbol, d(i,k) indicates the signal after synchronous detection of the k'th subcarrier in the i'th OFDM symbol, and f(i,k) indicates the hard decision value of the k'th subcarrier signal in the i'th OFDM symbol.

That is to say, time domain signals are first converted to frequency domain signals by having FFT processing executed on received signals r(i,j) by FFT 100. Demodulation sections (DEM) 101 obtain post-detection signals d(i,k) by performing synchronous detection (or differential detection) on subcarrier signals s(i,k). Decoding sections (DEC) 102 obtain receive data f(i,k) by executing a hard decision on post-detection signals d(i,k).

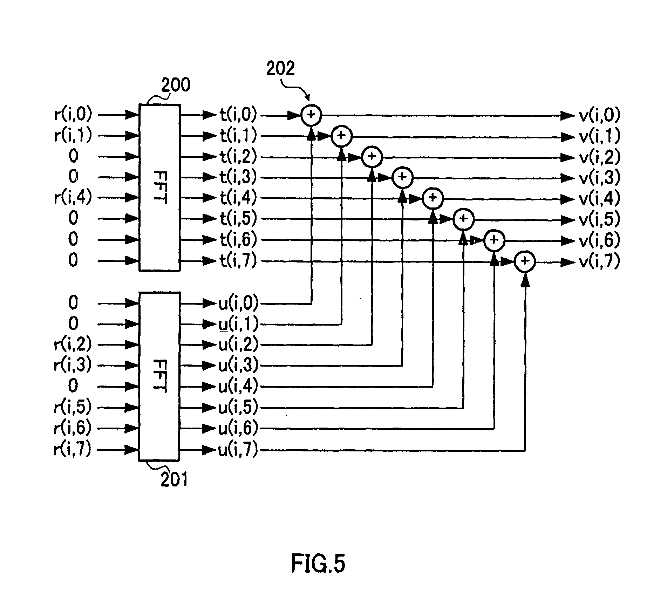

The principles of this embodiment will now be explained. In this embodiment, separate FFT processing sections are provided that perform Fourier transforms of sampling signals that have been peak-clipped and sampling signals that have not been peak-clipped. Specifically, as shown in FIG.5, peak-clipped signals r(i,0) , r(i,1), and r(i,4), and non-peak-clipped signals r(i,2), r(i,3), r(i,5), r(i,6), and r(i,7), are subjected to FFT processing by FFT 200 and FFT 201 respectively, with the respective other-side sampling signals as 0, and then corresponding subcarrier signals that have undergone Fourier transform processing are added by a plurality of adders 202.

In the figure here, t(i,k) indicates the k'th subcarrier signal found only from peak-clipped sampling signals in the i'th OFDM symbol, and u(i,k) indicates the k'th subcarrier signal found only from non-peak-clipped sampling signals in the i'th OFDM symbol. Here, if v(i,k) is taken as the k'th subcarrier signal to which t(i,k) and u(i,k) are added on an individual frequency component basis in the i'th OFDM symbol, since the computation is linear, v(i,k) = s(i,k).

Thus, even when OFDM signals are divided into peak-clipped sampling signals and non-peak-clipped sampling signals, Fourier transform processing is carried out separately on each, and signals of corresponding subcarriers that have undergone Fourier transform processing are added, as shown in FIG.5, the same kind of processing results can be obtained as when OFDM signals are simply subjected to Fourier transform processing directly as in FIG.4.

To consider now FFT 200 for peak-clipped sampling signals in FIG.5, FFT 200 processing can be represented as shown in the following equation, using an FFT known coefficient w(j,k).

$$t(i,k) = \sum_{j=0}^{n} w(j,k) r(i,j) \qquad \cdots \quad (1)$$

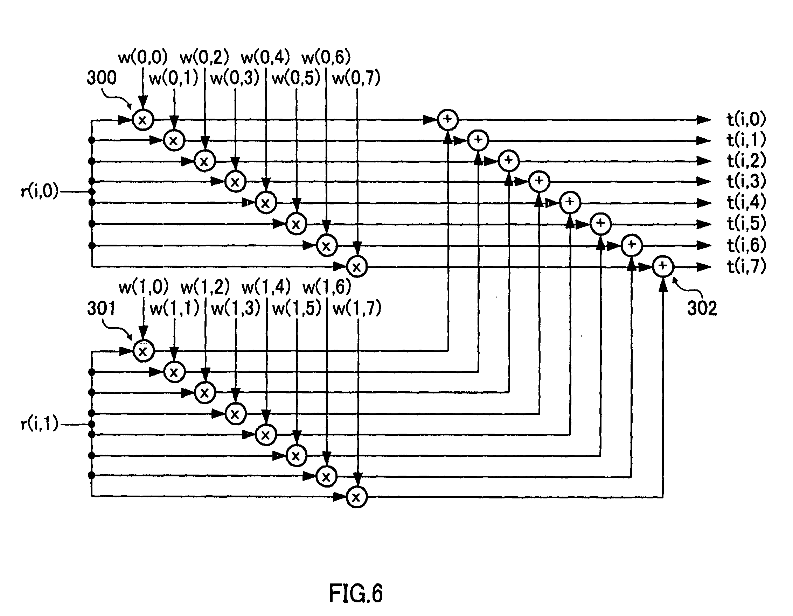

Equation (1) can be implemented by the kind of circuit configuration shown in FIG.6. That is to say, the actual processing of FFT 200 that performs Fourier transform processing of peak-clipped sampling signals in FIG. 5 can be implemented by the kind of circuit shown in FIG.6.

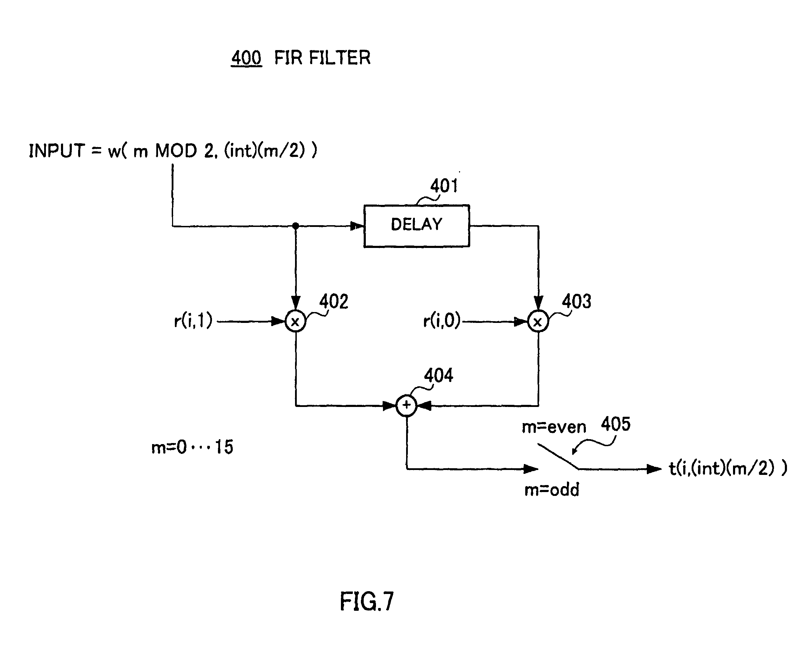

Moreover, the circuit in FIG.6 is equivalent to the FIR filter 400 shown in FIG.7. That is to say, FFT 200 can be regarded as FIR filter 400 using variable gain r(i,j) with FFT 200 known coefficient w(j,k) as its input.

Specifically, the value of known coefficient w(j,k) is sequentially modified and input to a multiplier 402, and is also input to a multiplier 403 via a delay element 401, and multiplication is performed by multipliers 402 and 403 with peak-clipped sample signals as variable gain. The signals resulting from these multiplications are added by an adder 404, and the resulting signal is output via a switch 405. In the case of this embodiment it is assumed that the number of subcarriers is 8, and therefore "m" in the figure is a value from 0 to 15. Also, switch 405 outputs the addition result directly only when m is an odd number.

Thus, the present inventors found that FFT processing can be implemented by means of an FIR filter with a known coefficient as its input and sample signals as variable gain. Here, since a signal that has not undergone peak clipping does not contain distortion other than noise, if a peak-clipped signal time waveform can be changed to a distortion-free waveform, it is possible to obtain an OFDM signal free of distortion due to peak clipping, etc. This is equivalent to converging variable gain r(i,1) and r(i,0) of FIR filter 400 in FIG.7 to an optimal value. The present inventors thus thought of converging variable gain (that is, peak-clipped sampling signals) to an optimal value through sequential correction while using an adaptive algorithm.

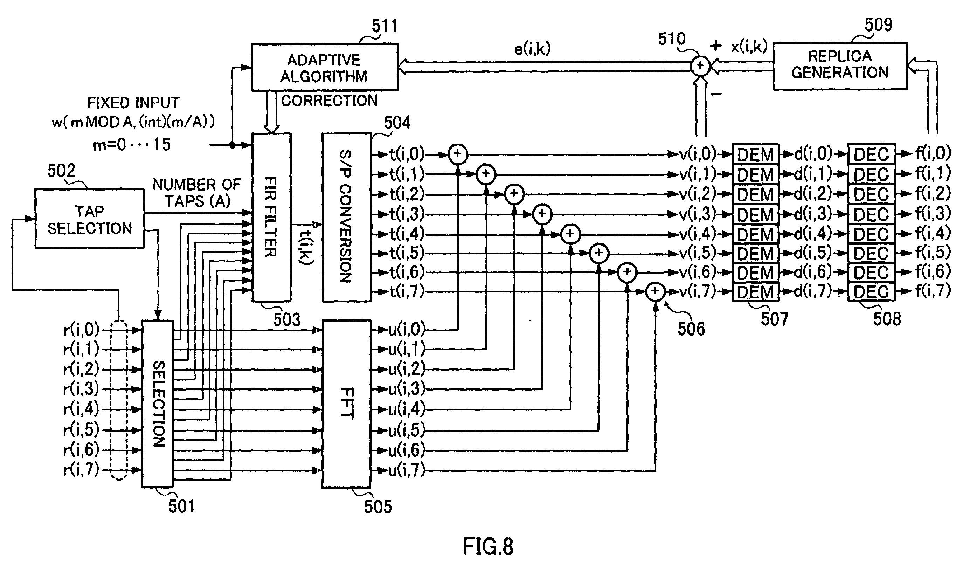

FIG.8 shows the configuration of an OFDM signal correction section in an OFDM receiving apparatus of this embodiment. Here, sampling signals r(i,0) through r(i,7) output from serial/parallel conversion section (S/P) 25 in FIG. 2 are input to a selection section 501. Based on a selection signal from a tap selection section 502 as a selecting means that selects sampling signals subject to correction and sampling signals not subject to correction, from among sampling signals r(i,0) through r(i,7) selection section 501 sends sampling signals that have undergone peak clipping on the transmitting side to an FIR filter 503, and sends sampling signals that have not undergone peak clipping to an FTT 505.

That is to say, tap selection section 502 is provided in order to detect which of input sampling signals r(i,0) through r(i,7) are peak-clipped sampling signals. In the case of this embodiment, in estimating the positions of peak-clipped sampling signals, tap selection section 502 finds the ratio to average power in each sampling signal, and regards a sampling signal for which that ratio is greater than or equal to a certain threshold value as being a peak-clipped sampling signal.

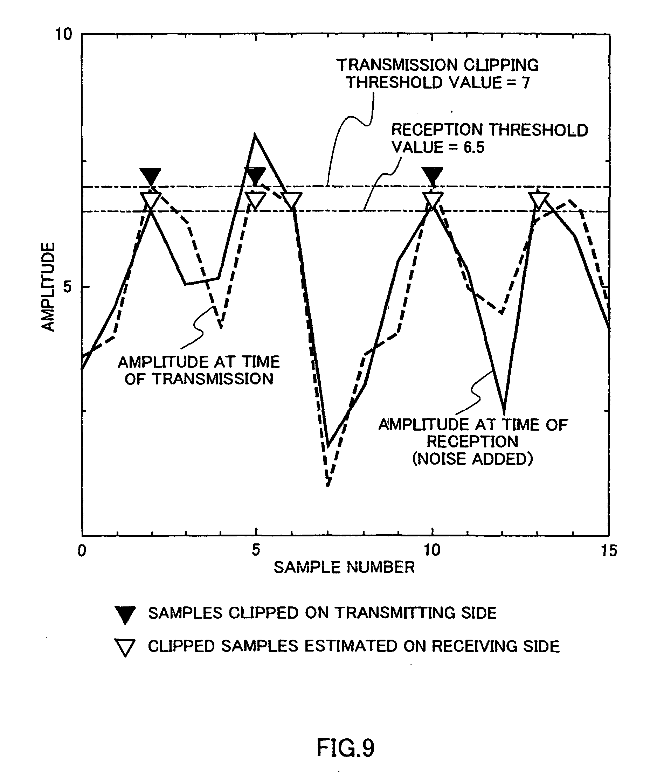

A detailed explanation will now be given with reference to FIG.9. In FIG.9, the dashed line indicates the transmit signal waveform, and the solid line indicates the received signal waveform. As the received waveform undergoes fluctuations during propagation, it differs somewhat from the transmitted waveform. The dash-dot line indicates the threshold value (= 7) used in peak clipping processing when transmitting, and the dash-dot-dot line indicates the threshold value (= 6.5) for estimating a peak-clipped sampling signal in the tap selection section.

If there is no propagation path fluctuation, there is a high degree of possibility that a sample received at virtually the same amplitude as the threshold value (= 7) set on the transmitting side has been clipped. In this embodiment, [transmitting-side threshold value $\times \alpha$] (where $\alpha$ is a positive number less than 1) is set as the receiving-side threshold value, and a sampling signal that exceeds this threshold value is regarded as a peak-clipped sampling signal.

Thus in tap selection section 502, by estimating peak-clipped sampling signals using a threshold value set lower than the transmitting-side peak clipping threshold value, it is possible to select peak-clipped sampling signals without missing any. In the example in FIG.9, sampling signals with sample numbers 4, 5, 6, 10, and 13 are selected as peak-clipped sampling signals. Of these, sampling signals with sample numbers 6 and 13 are actually sampling signals that have not been subjected to peak clipping, but there is no problem in terms of operation if these sampling signals are sent to FIR filter 503. In other words, in terms of improving reception quality this is preferable to overlooking peak-clipped sampling signals.

Returning to FIG.8, the configuration of the OFDM signal correction section will now be described. Into FIR filter 503, FFT known coefficients are sequentially input as fixed input, and sampling signals estimated as having undergone peak clipping are input as tap coefficient initial values. FIR filter 503 output signal t(i,k) is sent to adders 506 via a serial/parallel conversion (S/P conversion) section 504.

Meanwhile, sampling signals estimated as not having undergone peak clipping are subjected to FFT processing by FTT 505, and are then sent to adders 506. Post-FFT signals v(i,k) in each subcarrier obtained by adders 506 are input sequentially to demodulation sections (DEM) 507 and decoding sections (DEC) 508 as digital signal forming means, and undergo synchronous detection processing (or differential detection processing) by demodulation sections (DEM) 507 and hard decision processing by decoding sections (DEC) 508, as a result of which hard decision values f(i,k) - that is, received digital signals - are formed.

In addition to the above-described configuration, a replica generating section 509 is also provided in the OFDM signal correction section. Replica generating section 509 generates replica signals x(i,k) corresponding to post-FFT signals v(i,k) in each subcarrier by multiplying hard decision values f(i,k) by the channel amplitude and phase (that is, executing the reverse of the processing by demodulation sections (DEM) 507) on a subcarrier-by-subcarrier basis. This channel amplitude and phase information may be obtained based simply on the amplitude value and phase rotation amount of a pilot signal, or may be obtained by impulse response detection.

Difference values between post-FFT signals v(i,k) and replica signals x(i,k) are obtained by a subtracter 510, and these difference values are sent to an adaptive algorithm section 511 as error values e(i,k) of post-FFT signals v(i,k) and replica signals x(i,k).

Adaptive algorithm section 511 is configured by means of LMS (Least Mean Square), RLS (Recursive Least Squares), GA (Generic Algorithm), etc., and sends to FIR filter 503 signals ordering correction of peak-clipped sampling signals r(i,j) used as FIR filter 503 variable gain so that error values e(i,k) are decreased.

Next, the operation of the OFDM signal correction section will be described. If hard decision values f(i,k) are correct, waveforms in which fluctuations such as distortion have been eliminated from v(i,k) are reproduced by replica generating section 509. As a result, if hard decision values f(i,k) are correct, then if peak-clipped sampling signals r(i,j) (where j is a sample number selected by tap selection section 502) are converged so as to minimize error values e(i,k), demodulated signals v(i,k) in which distortion due to peak clipping has been corrected shouldbe obtained. Even if hard decision values f(i,k) include errors, as long as the error rate is sufficiently small, convergence by means of an adaptive algorithm is still possible by making a suitable choice of parameters, in the same way as with a DFE (Decision Feedback Equalizer) or the like.

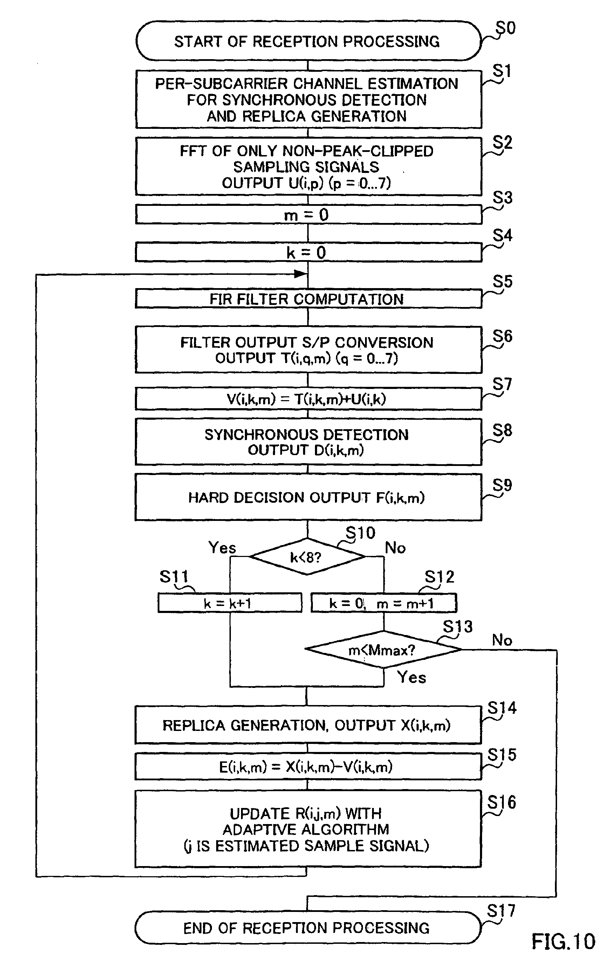

In this embodiment, the OFDM signal correction section effectively eliminates an interference component due to peak clipping included in an OFDM signal by carrying out the kind of reception processing shown in FIG.10. As an adaptive algorithm achieves convergence by numerous repetitions, in FIG.10 the description of each signal in FIG.8 includes the number of repetitions "m". Also, variables in FIG.10 and FIG.8 have an upper-case to lower-case correspondence, so that, for example, V(i,k,m) in FIG. 10 is the value at the m'th repetition of v(i,k) in FIG.8. The error in the m'th repetition is designated E(i,k,m), and the sample number j received signal updated using this is designated R(i,j,k,m).

After starting reception processing for the i'th OFDM symbol in step S0, in step S1 the OFDM signal correction section carries out channel estimation for each subcarrier by means of a channel estimation section (not shown) in order to perform detection in demodulation sections 507 and replica signal x(i,k) generation in replica generating section 509. Then in step S2, signal U(i,p) of each subcarrier is formed from only sampling signals that have not undergone peak clipping by having FFT 505 perform Fourier transform processing of sampling signals that have not undergone peak clipping. In step S3, count value m of the OFDM signal correction section repetition counter (provided, for example, in the control section of the receiving apparatus in which the OFDM signal correction section is installed) is reset, and in the next step, S4, subcarrier number k is reset. As an example with 8 subcarriers is illustrated here, k has a value from 0 to 7.

In step S5, FIR filter 503 takes an FFT known coefficient as input, and performs computation with interference area sample signals as variable gain, thereby sequentially forming signals T(i,q,m) of each subcarrier from peak-clipped sampling signals only. In step S6, subcarrier signals T(i,q,m) sequentially obtained by FIR filter 503 undergo serial/parallel conversion by serial/parallel conversion section 504.

In step S7, addition signal V(i,k,m) is obtained by adding, with adder 506, peak-clipped sampling signal per-subcarrier signal T(i,k,m) obtained in steps S5 and S6, and non-peak-clipped per-subcarrier signal U(i,k) obtained in step S2 in the corresponding subcarriers.

In step S8, demodulated signal D(i,k,m) is obtained by having synchronous detection performed by demodulation section 507, and then in step S9, hard decision value F(i,k,m) is obtained by having a hard decision made by decoding section 508.

In step S10, it is determined whether or not the subcarrier number subject to adaptive algorithm processing this time is less than 8 (the number of subcarriers) , and if this subcarrier number is less than 8, the processing flow proceeds to step S11 and subcarrier number k is incremented. Then, in step S14, k'th subcarrier replica signal X(i,k,m) is generated by replica generating section 509, and in step S15 error value E(i,k,m) is found by finding the difference between k'th subcarrier replica signal X(i,k,m) and addition signal V(i,k,m) by means of subtracter 510.

In step S16, adaptive algorithm section 511 corrects FIR filter 503 variable gain (that is, peak-clipped sampling signal) R(i,j,m) so that error value E(i,k,m) is decreased, and this is sent to FIR filter 503. After the processing in step S16, the processing flow returns to step S5, and FIR filter 503 executes computation using corrected variable gain R(i,j,m).

In this way, the OFDM signal correction section repeats the processing loop comprising steps S5-S6-S7-S8-S9-S10-S11-S14-S15-S16-S5 until the subcarrier number reaches 8. By this means, error value E(i,k,m) can be reduced as subcarrier number k increases and the distortion component is eliminated in proportion to the size of subcarrier number k, and a hard decision value F(i,k,m) with a small error rate can be output in step S9.

Eventually, when processing has been completed for 8 subcarriers, a negative result is obtained in step S10 and the processing flow proceeds to step S12, in which subcarrier number k is restored to 0 and repetition count value m is incremented. Then, in step S13, it is determined whether or not repetition count value m is less than a set maximum value Mmax, and if m is less than Mmax, the processing flow proceeds to step S14. The processing loop comprising steps S5-S6-S7-S8-S9-S10-S11-S14-S15-S16-S5 is then repeated until the subcarrier number reaches 8, in the same way as described above. Eventually, when the number of repetitions reaches Mmax, the processing flow proceeds to step S17 and reception processing for the i'th OFDM signal is terminated.

In this way, the OFDM signal correction section sequentially converges variable gain R(i,j,k,m) using double loops based on repetition count m and subcarrier number k. By this means error E(i,k,m) is gradually reduced, and in line with this the number of hard decision value F(i,k,m) errors decreases and error E(i,k,m) can also be made progressively smaller. As a result, a received signal that includes a distortion component due to peak clipping can be made to approach a distortion-free waveform.

Moreover, since only peak-clipped sampling signals are corrected in the OFDM signal correction section, sampling signals that have not undergone peak clipping can be left unchanged at R(i,j,k,m) = R(i,j,k,0). As a result, the distortion component can be eliminated by correcting only peak-clipped sampling signals, enabling the amount of computational processing by adaptive algorithm section 511 to be reduced, and the distortion component can be eliminated in a short time and efficiently.

Thus, according to this embodiment, sampling signals sampled from a received OFDM signal are divided into peak-clipped sampling signals and non-peak-clipped sampling signals, Fourier transformprocessing is carried out separately for the peak-clipped sampling signals and non-peak-clipped sampling signals, and peak-clipped sampling signals are corrected so as to converge the error between replica signals x(i,k) generated from post-decoding signals and pre-modulation signals v(i,k) using an adaptive algorithm, thereby enabling the distortion component due to peak clipping to be eliminated.

In this embodiment, a case has been described in which an FIR filter 503 and serial/parallel conversion section 504 are provided as a first Fourier transform processing section that performs Fourier transform processing on peak-clipped sampling signals, and an FFT 505 is provided as a second Fourier transform processing section that performs Fourier transform processing on non-peak-clipped sampling signals, but the present invention is not limited to this, and it is also possible for peak-clipped sampling signals and non-peak-clipped sampling signals to be input together as FIR filter variable gain, and for that FIR filter variable gain to be corrected by means of an adaptive algorithm.

By so doing, it is possible to provide the Fourier transform processing section with a fundamental Fourier transform processing function, in which a sampled received signal is divided into a plurality of subcarrier signals, and also with a function as a filter that eliminates a distortion component (hard decision error component) that appears as an error value between a replica signal and a signal resulting from Fourier transform processing.

(Embodiment 2)

In above-described Embodiment 1, a case was described in which, in estimating peak-clipped sampling signals, a ratio to average power is taken in each sampling signal sampled from a received OFDM signal, and a sampling signal for which this ratio exceeds a certain threshold value is regarded as a peak-clipped sampling signal.

In this embodiment, on the other hand, a provisional decision is first made on a received OFDM signal, a transmit waveform is generated by performing IFFT processing on the provisional decision data, and a sampling signal at a position that exceeds a predetermined threshold value in the generated transmit waveform system is selected as a peak-clipped sampling signal. By this means, it is possible to select a peak-clipped sampling signal more accurately. As a result, it becomes possible for only sampling signals that actually require correction to be corrected by means of an adaptive algorithm, thereby enabling the adaptive algorithm convergence time to be shortened.

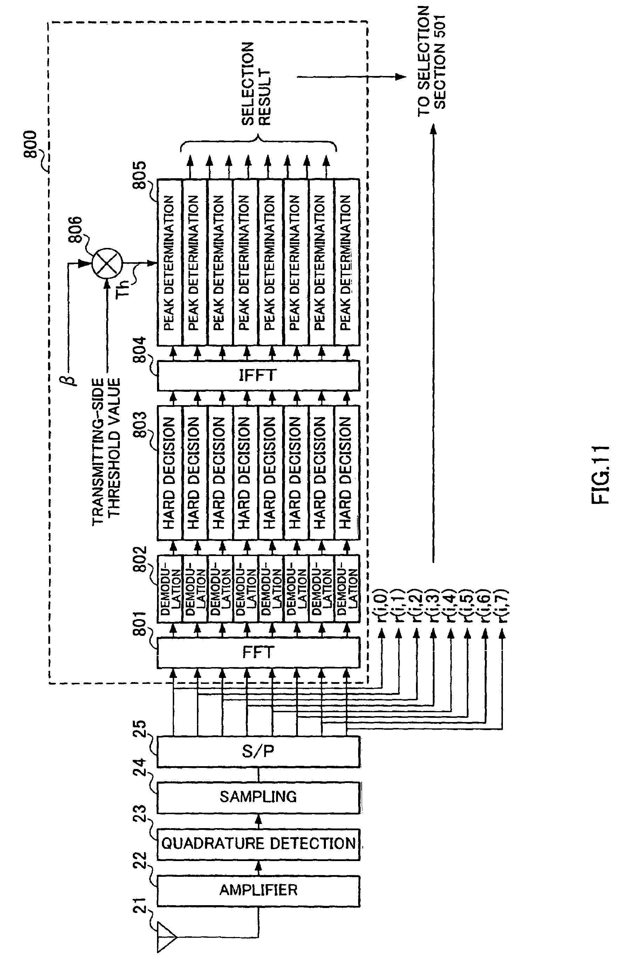

FIG.11 is a block diagram showing the configuration of a tap selection section 800 according to this embodiment. Parts in FIG.11 identical to corresponding parts in FIG.2 are assigned the same codes as in FIG.2 and descriptions of these parts are omitted. In tap selection section 800, sampling signals sampled from a received OFDM signal are converted to signals of each subcarrier by an FFT 801. The subcarrier signals undergo detection processing by demodulation sections 802, and then hard decision processing by a hard decision section 803, to become provisional decision data. The provisional decision data undergoes inverse Fourier transform processing by an IFFT 804. By this means the transmit waveforms are regenerated, and these regenerated waveforms are sent to peak determination sections 805.

A threshold value Th equivalent to the transmitting-side threshold value $\times$ $\beta$ is input to peak determination sections 805 from a multiplier 806, where $\beta$ needs not be necessarily less than 1. Each peak determination section 805 compares the amplitude of the corresponding sampling point with threshold value Th. Sample numbers exceeding threshold value Th are then output to selection section 501 (FIG.8) as selection results.

(Embodiment 3)

This embodiment takes note of the fact that, with regard to peak clipping, the phase of each sample is basically maintained, and correction need only be performed in the amplitude direction. Taking this into consideration, in the processing in adaptive algorithm section 511 (FIG. 8), a restriction is applied to the effect that only the amplitude direction of a received sampling signal is corrected. By this means, it is possible to make the adaptive algorithm suitable for elimination of distortion due to actual peak clipping, and also to shorten the convergence time.

Generally, with LMS and RLS, a complex number is treated as a tap coefficient, and this is converged. In this case, there is no correlation between the amount of correction of the real part and imaginary part, but in the case of this embodiment, a correlation between the amount of correction of the real part and imaginary part is provided.

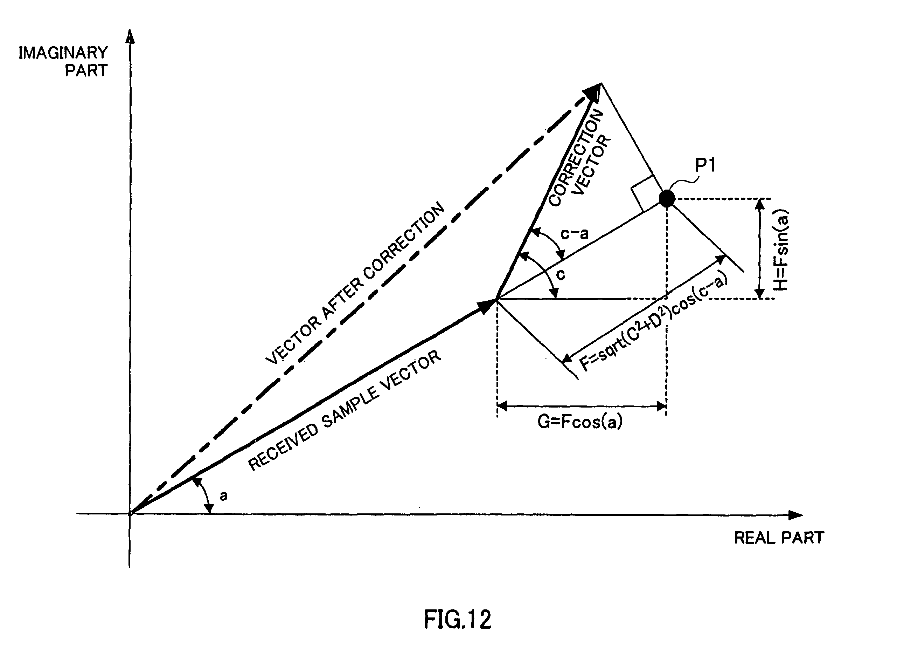

For example, in FIG.12 if the real part of a received sampling signal is designated A, and the imaginary part is designated B, the vector of this sampling signal can be represented by the complex number A+jB. Assume that correction whereby a correction vector C+jD is applied to this sampling signal is then performed by means of an adaptive algorithm.

In this case, if C/A = D/B the phase is maintained, and if this is not the case, the phase is not maintained ("vector after correction" in the figure). That is to say, a post-correction vector such as shown in FIG.12 is not desirable as the phase is not maintained. Thus, provision is made to maintain the phase. If amplitude direction compensation is considered the correct approach, the following method can be considered.

When the real part of a pre-correction sampling signal is designated A and the imaginary part B, the vector is represented by complex number A+jB and the phase of that complex number is designated a, and also the real part of a correction vector for correcting this sampling signal is designated C and the imaginary part D, the vector is represented by complex number C+jD and the phase of that complex number is designated c, then of the correction vector components, pre-correction vector amplitude direction magnitude F can be represented by F = sqrt $(C^2 + D^2)$ cos(c-a).

Within this pre-correction vector amplitude direction magnitude F, real part direction component G and imaginary part direction component H can be expressed as G = Fcos (a) and H = Fsin (a) respectively, and therefore post-correction new sampling point P1 is (A+G) + j(B+H). That is to say, real part I and imaginary part Q of new sampling point P1 are given by the following equations:

$$I = \text{sqrt} ((A+C)^2 + (B+D)^2) \times \cos (a)$$

$$Q = \text{sqrt} ((A+C)^2 + (B+D)^2) \times \sin (a)$$

where sqrt ( ) indicates the square root of ( ) ... (2)

As a result, in the processing in adaptive algorithm section 511 (FIG.8), it is possible to correct only the amplitude direction of a received sampling signal, enabling the adaptive algorithm to be made suitable for elimination of distortion due to actual peak clipping, and also enabling the convergence time to be shortened.

(Embodiment 4)

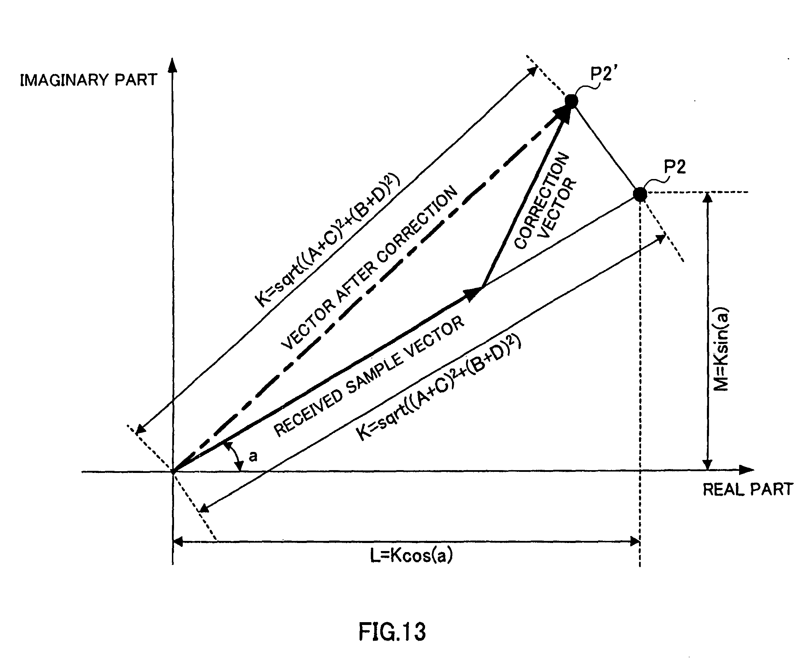

In this embodiment, a restriction is applied to the effect that only the amplitude component is corrected by an adaptive algorithm, in the same way as in Embodiment 3. However, whereas in Embodiment 3, within the correction vector, only the pre-correction sample vector (received sample vector) direction component was used in correction, in this embodiment, as shown in FIG. 13, a sampling point P2' at which a correction vector is added to the pre-correction vector is first found, and a new sampling point P2 is found by restoring the phase only in the pre-correction sample vector direction while maintaining the amplitude of sampling point P2'.

Here, the length to sampling point P2' found by adding the correction vector to the pre-correction vector (in the figure, the length of "vector after correction") K can be expressed as K = sqrt $((A+C)^2+(B+D)^2)$, and therefore the length to new sampling point P2 is equal to K. At this time, real part direction component L and imaginary part direction component M can be expressed as L = Kcos (a) and M = Ksin(a), respectively, and therefore post-correction new sampling point P2 is L+jM. That is to say, real part I and imaginary part Q of new sampling point P2 are given by the following equations:

$$I = \text{sqrt} ((A+C)^2+(B+D)^2) \times \cos (a)$$

$$Q = \text{sqrt} ((A+C)^2+(B+D)^2) \times \sin (a)$$

where sqrt ( ) indicates the square root of ( ) ... (3)

As a result, as in Embodiment 3, in the processing in adaptive algorithm section 511 (FIG. 8), it is possible to correct only the amplitude direction of a received sampling signal, enabling the adaptive algorithm to be made suitable for elimination of distortion due to actual peak clipping, and also enabling the convergence time to be shortened.

(Embodiment 5)

In above Embodiment 3 and Embodiment 4, a case has been described in which correction is performed only in the amplitude direction, but in this embodiment a method is proposed whereby after correcting only the amplitude component of a sampling signal, the sampling signal phase component is then corrected.

Actually, since noise is superimposed on a received OFDM signal, error also remains in the phase direction. However, this phase direction noise is not caused by peak clipping. Therefore, when amplitude is corrected so as to increase, phase error due to noise remains unchanged, and thus the absolute value of the error increases to the extent that the amplitude increases.

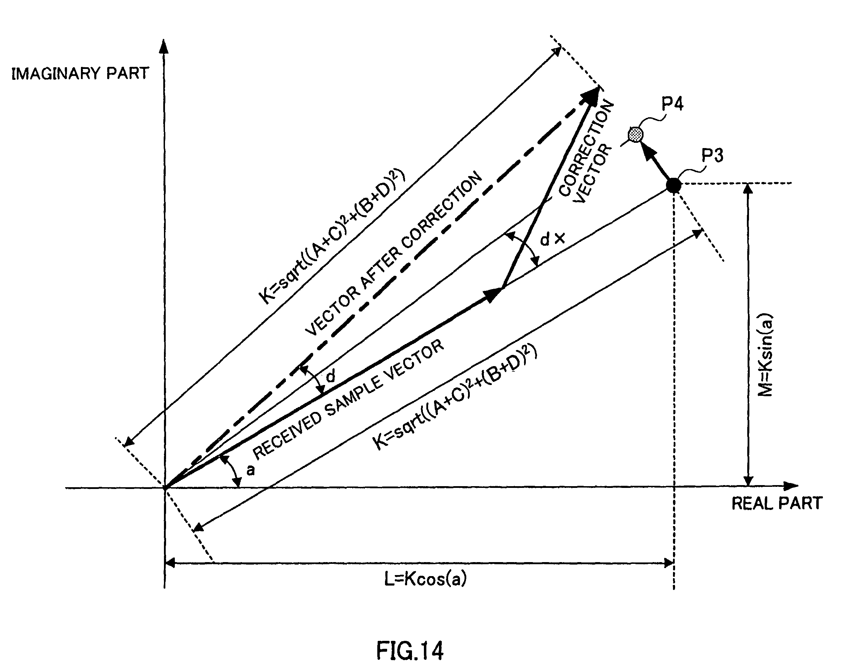

Taking this into consideration, phase direction correction is carried out after performing amplitude direction correction. However, phase direction correction is performed using a different weight from amplitude direction correction. This is illustrated in FIG. 14. First, sampling point P3 at which only amplitude direction correction is performed is found using the same method as in Embodiment 4.

Next, new sampling point P4 is found by rotating sampling point P3 by the phase obtained by multiplying phase difference (d) from the post-correction vector by a constant r, where r is a positive number less than 1. By so doing, it is possible to suppress the phase direction noise component that has increased due to execution of correction that increases the amplitude. Incidentally, the case where r = 0 is the same as the case in Embodiment 3 or Embodiment 4.

(Embodiment 6)

In this embodiment, an OFDM signal correction method is proposed that enables correction accuracy to be significantly improved in the event of multipathing on the propagation path.

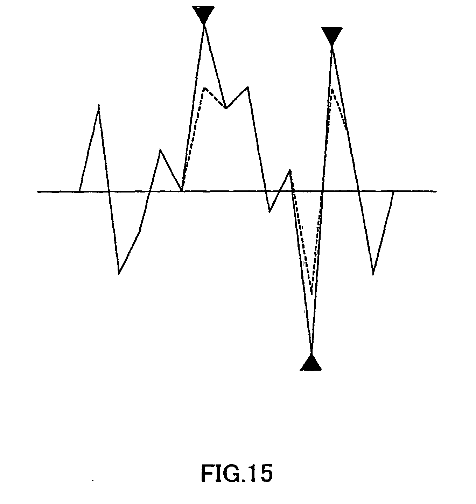

It is assumed here that an OFDM signal is subjected to peak clipping as shown in FIG.15. The horizontal axis indicates samples, and the vertical axis indicates the signal waveform in those samples. Black triangles indicate peak-clipped samples. The solid line shows the original waveform, and dashed lines show the peak-clipped waveform.

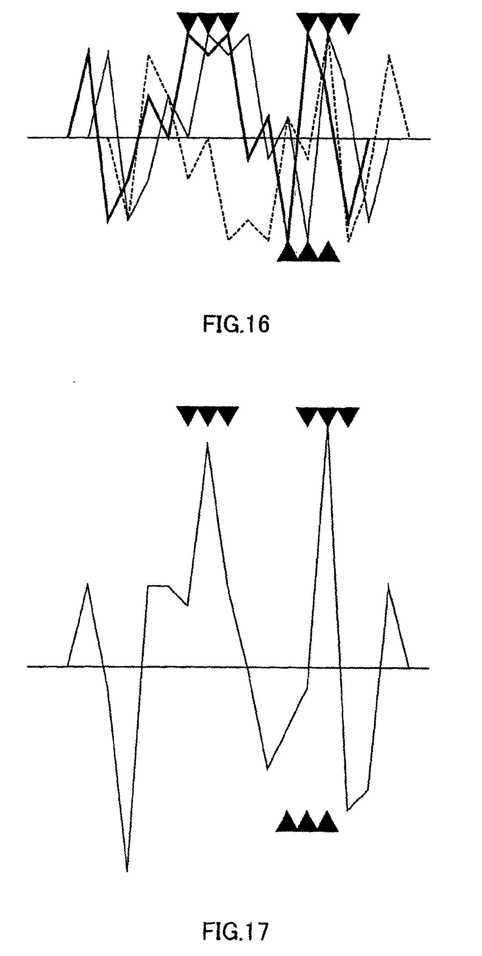

In a case such as this, if there is one path a signal is received as-is on the receiving side (although there are phase and amplitude fluctuations, the waveform is transmitted as-is in analog form), and therefore peak clipping correction can be performed satisfactorily by means of the configurations in Embodiments 1 through 4. However, in the case of multipath propagation, the situation is as shown in FIG.16. FIG.16 shows an example in which three paths arrive at amplitudes of 1, 1, and -1 due to conditions on the three paths. The first path is indicated by a bold line, the second by a fine line, and the third by a dashed line.

A waveform that combines these three is shown in FIG.17. In this case, it can be seen that whereas wave distortion suffered by a peak-clipped symbol applies to only 3 samples in the case of one path, this has increased to 7 samples (the number of black triangles has increased). Moreover, to determine which samples have been affected, it is necessary to find the time domain channel impulse response. Furthermore, when there are more paths, more samples must be updated, and time domain impulse response precision also falls as the number of paths increases, so that correction precision will probably decline.

In this embodiment, taking these points into consideration, a method is proposed that enables an OFDM signal to be corrected with high precision even when applied to a multipath environment. The present inventors considered that, since an OFDM signal can be corrected with high precision using the configurations in Embodiments 1 through 5 when there is one path, it would be satisfactory to perform the correction in Embodiments 1 through 5 after performing equalization to restore multiple paths to one path in a multipath environment.

In this embodiment, as one such example, it is proposed that multipath signals be restored to a single-path signal by performing frequency axis equalization on the multipath signals.

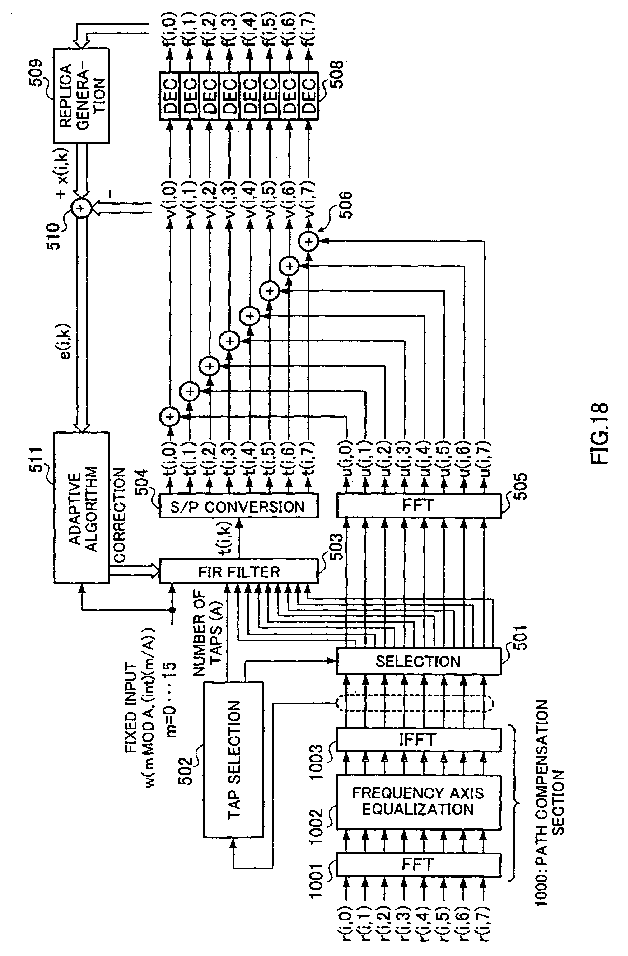

FIG.18, in which parts corresponding to those in FIG.8 are assigned the same codes as in FIG.8, shows the configuration of an OFDM signal correction section of Embodiment 6. The OFDM signal correction section of this embodiment has a path compensation section 1000 that compensates for the effects of received OFDM multipath signals.

In path compensation section 1000, sampling signals r(i,0) through r(i,7) are input to an FFT 1001 provided as a Fourier transform processing means. FFT 1001 extractssamplingsignalssuperimposedoneachsubcarrier by executing Fourier transform processing on sampling signals r(i,0) through r(i,7). The extracted subcarrier signals are sent to a frequency axis equalization section 1002.

Frequency axis equalization section 1002 eliminates multipath influence on a subcarrier-by-subcarrier basis by performing complex division of each subcarrier signal by a channel estimation value for each subcarrier. As frequency axis equalization is a known technique, it will not be explained in detail here. What is necessary, for example, is to estimate per-subcarrier amplitude and phase fluctuations based on a known signal superimposed on each subcarrier, and based on these estimates, restore subcarrier signals that have slumped due to frequency selective fading caused by multipath propagation to their original state.

Subcarrier signals from which multipath influence has been eliminated by frequency axis equalization section 1002 - that is, subcarrier signals compensated to single-path signals - are restored to the same waveform as sampling signals obtained from a received OFDM signal by means of an IFFT (inverse fast Fourier transform section) 1003 provided as an inverse fast Fourier transform processing means, and then sent to selection section 501 and tap selection section 502, after which the same kind of processing is performed as in Embodiments 1 through 5.

In the OFDM signal correction section of this embodiment, demodulation sections (DEM) 507 (FIG.8) required in Embodiments 1 through 5 can be omitted, as shown in FIG.18. This is because when multipath influence is eliminated by frequency axis equalization section 1002, amplitude and phase compensation is performed for each subcarrier signal. Also, as equalization on the frequency axis also corrects phase, the effect of sampling points shifting between transmission and reception (seen as each subcarrier undergoing phase fluctuation proportional to the subcarrier number) can also be eliminated.

Thus, according to the above configuration, by providing a path compensation section 1000 that restores multipath signals to single-path signals, and performing the correction processing described in Embodiments 1 through 5 on the signals that have undergone compensation, it is possible to improve the precision of correction in a multipath environment, in addition to obtaining the effects of Embodiments 1 through 5.

(Embodiment 7)

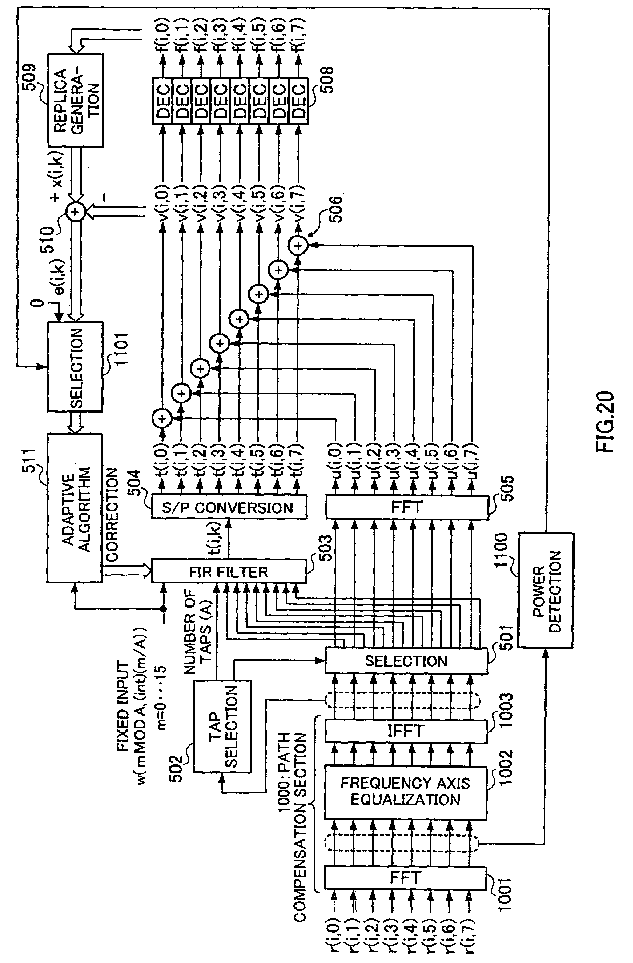

FIG.20, in which parts corresponding to those in FIG.18 are assigned the same codes as in FIG.18, shows the configuration of an OFDM signal correction section of Embodiment 7. The OFDM signal correction section of this embodiment has a power detection section 1100 that detects the reception power of each subcarrier signal. Power detection section 1100 detects the reception power of each subcarrier based on a known signal superimposed on each subcarrier, and sends the detection results to a selection section 1101.

Selection section 1101 selects from error values $e(i,k)$ of input subcarriers k only error values $e(i,k)$ corresponding to a predetermined number of subcarriers from the highest reception power. Specifically, error values $e(i,k)$ are output directly for the predetermined number of subcarriers from the highest reception power, and a value of 0 is output for subcarriers k with lower reception power. By excluding subcarriers with low reception power from the adaptive algorithm in this way, it is possible to increase the precision of correction significantly in a multipath environment.

That is to say, there are subcarriers with a signal amplitude close to 0 because of frequency selective fading due to multipath propagation, and if frequency equalization is performed for such subcarriers, amplification is performed using an extremely large amplification factor, and moreover this only amplifies noise. As a result, a large amount of noise is mixed in with the single-path waveform regenerated by IFFT 1003. According to this embodiment, such noise contamination can be effectively prevented and the precision of correction by means of an adaptive algorithm can be improved.

Thus, according to the above configuration, by detecting the signal power of subcarriers, selecting subcarrier signals to be subject to an adaptive algorithm in accordance with the results of this detection, and performing correction without using subcarrier sthat have slumped due to multipath propagation, it is possible to improve the precision of correction significantly in a multipath environment, in addition to obtaining the effect of Embodiment 6.

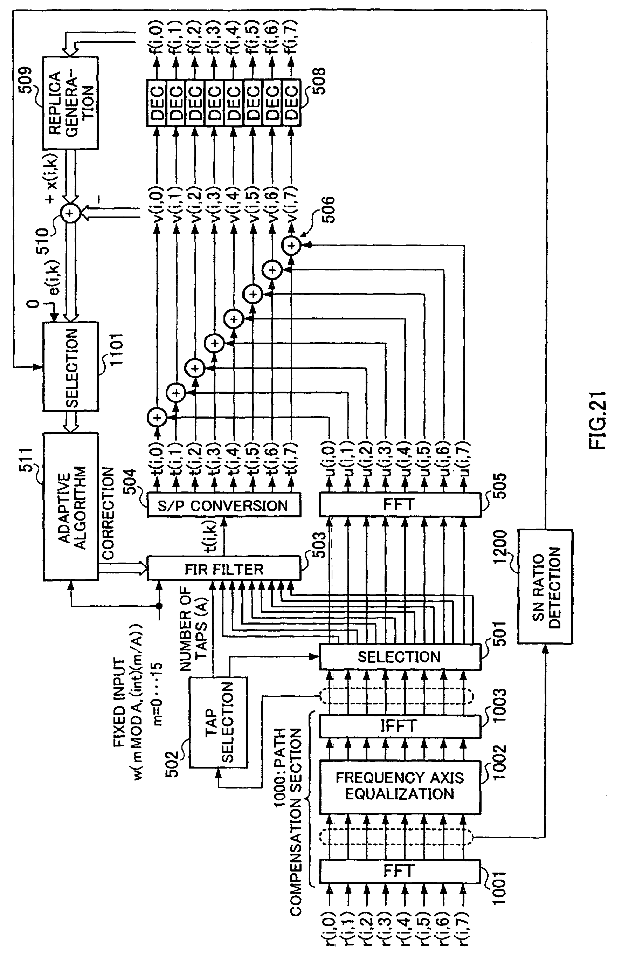

In this embodiment, a case has been described in which subcarrier signal power is detected, and subcarrier signals to be used in an adaptive algorithm are selected in accordance with the detection results, but the present invention is not limited to this, and it is also possible to provide an SN ratio detection section 1200 instead of power detection section 1100, as shown in FIG.21, to select only signals of a predetermined number of subcarriers from the highest reception SN ratios by means of selection section 1101, and not to use subcarriers with a poor SN ratio.

Also, in this embodiment, a case has been described in which selection section 1101 is provided after subtracter 510, and signals of subcarriers with low signal power are excluded from correction by selecting 0 as the error value of a signal of a subcarrier with low reception power, but the present invention is not limited to this, and it is also possible, for example, to input results of detection by power detection section 1100 to adaptive algorithm section 511, and select subcarrier signals that are not to be reflected in the adaptive algorithm by means of adaptive algorithm section 511.

Furthermore, it is also possible to not simply perform selection, but to apply a weight according to power or the SN ratio, thereby reflecting a probable carrier with a larger weight, and an improbable carrier with a smaller weight.

(Other Embodiments)

In the above-described embodiments, cases have been described in which reception quality is improved by eliminating distortion due to peak clipping, but the present invention is not limited to this, and the configuration of the present invention shown in FIG.8 can be widely applied to cases where distortion or noise is superimposed upon a received OFDM signal. A number of examples are given below.

(1) Elimination of interference by another user's signal

When a signal is transmitted using on/off control, as in the case of packet transmission, it may happen that only part of a received signal is affected by interference from another user's signal. This kind of situation occurs, for example, when one's own signal and another user's signal are asynchronous. Also, even if there is synchronization between users, there is a possibility of such a situation occurring when there is a difference in times for arrival at the base station according to users' locations in random access transmission.

By applying the present invention to a case where only part of a received OFDM signal is affected by interference from another user's signal in this way, it is possible to eliminate interference by correcting only thepartreceivinginterference,enabling receivedsignal quality to be improved.

In this case, it is only necessary to select sampling signals receiving interference by another user's signal by means of tap selection section 502 in FIG.8, send the selected sampling signals to FIR filter 503, and send sampling signals not receiving interference to FTT 505. This selection can be implemented by detecting sampling signal power, for example.

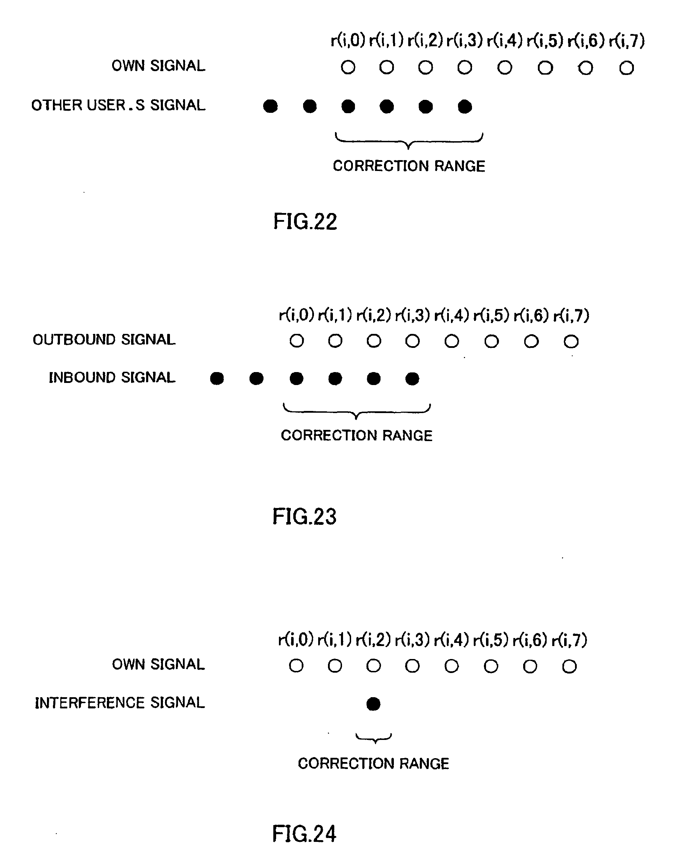

FIG.22 shows an example of a correction range (sampling signals selected as subject to interference elimination). Of sampling signals r(i,0) through r(i,7) sampled from a received OFDM signal, sampling signals r(i,0) through r(i,3) that temporally overlap another user's signal are sent to FIR filter 503, and remaining sampling signals r(i,4) through r(i,7) are sent to FTT 505.

(2) Elimination of interference between inbound signal and outbound signal in TDD (Time Division Duplex) transmission/reception

In a TDD system, an inbound signal and outbound signal are transmitted using the same frequency divided on a time basis. At this time, the inbound signal and outbound signal may overlap temporally. For example, if a terminal is distant, a signal may be delayed due to radio wave transmission delay.

By applying the present invention to a case where interference between inbound and outbound signals is present in only part of a received OFDM signal in this way, it is possible to eliminate interference by correcting only the part receiving interference, enabling received signal quality to be improved.

In this case, also, it is only necessary to select sampling signals receiving interference between inbound and outbound signals by means of tap selection section 502 in FIG.8, send the selected sampling signals to FIR filter 503, and send sampling signals not receiving interference to FTT 505. This selection can be implemented by detecting sampling signal power, for example.

FIG.23 shows an example of a correction range. Of sampling signals r(i, 0) through r(i,7) sampled from a received OFDM signal, sampling signals r(i,0) through r(i,3) for which there is temporal overlap between inbound and outbound signals are sent to FIR filter 503, and remaining sampling signals r(i,4) through r(i,7) are sent to FTT 505

(3) Elimination of impulse noise

Noise may occur in impulse form. In such cases, it is sufficient to correct only sampling signal r(i,2) corresponding to the interference signal, as shown in FIG.24. When, for example, another system uses the same frequency and that system generates spike noise (which is particularly prone to generation in UWB (ultra-wideband) systems) , there is a possibility of some sampling signals degrading.

Impulse noise can be eliminated satisfactorily by detecting these degraded sampling signals by means of power detection or a sample round-robin method, etc., and sending sampling signals selectively to FIR filter 503 in FIG.8.

(4) Elimination of white noise

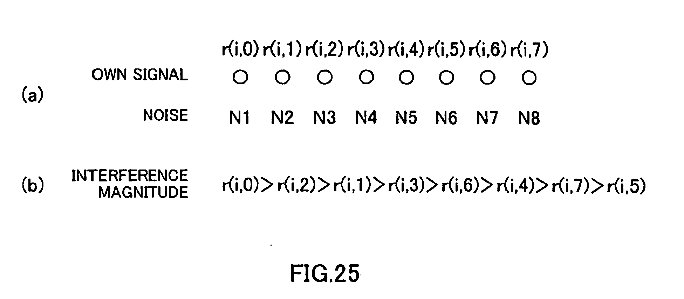

By using an OFDM receiving apparatus of the present invention, it is also possible to eliminate white noise superimposed on a received OFDM signal as a noise component. One example of this will be described. First, all sampling signals r(i,0) through r(i,7) shown in FIG.25 (a) are input to FIR filter 503, and correction is performed. Then the SN ratio or error sumof squares of post-correction demodulated signals is found, and sampling signals are ranked by magnitude of noise, referring to those values.

That is to say, first, only sampling signal r(i,0) is input to FIR filter 503, then only sampling signal r(i,1) is input to FIR filter 503, and so on, so that only one sampling signal is input to FIR filter 503 and the other sampling signals are input to FTT 505. At this time, the SN ratio or error sum of squares of a demodulated signal at the time of correction when each sampling signal is input to FIR filter 503 is found. The fact that the SN ratio or error sum of squares when a certain sampling signal is corrected is large means that the noise of that sampling signal is large. In this way, noise magnitude is ranked for sampling signals r(i,0) through r(i,7), as shown in FIG.25 (b).

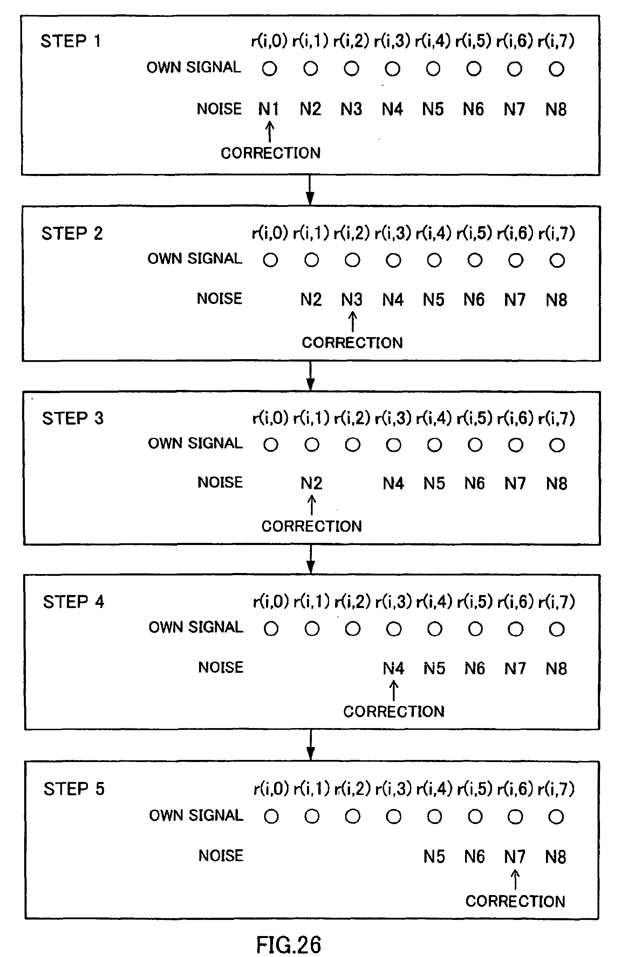

Next, as shown in FIG.26, input to FIR filter 503 is performed in order from the sampling signal determined to have the largest noise, and white noise is eliminated. That is to say, first, in Step 1, sampling signal r (i, 0) for which noise has been determined to be the largest is input to FIR filter 503, thereby eliminating the noise component of this sampling signal r(i,0).

Next, in Step 2, sampling signal r(i,2) for which noise has been determined to be the second largest is input to FIR filter 503, thereby eliminating the noise component of this sampling signal r(i,2). By thus sequentially inputting sampling signals to FIR filter 503 in order from the sampling signal determined to have the largest noise, and eliminating the noise, it is possible for white noise to be eliminated satisfactorily from a received OFDM signal in which white noise is superimposed as noise.

The present invention is not limited to the above-described embodiments, and various variations and modifications may be possible without departing from the scope of the present invention.

An OFDM receiving apparatus of the present invention has a configuration comprising a Fourier transform processing section provided with an FIR filter that takes a sampling signal sampled from a received OFDM signal as variable gain and also has as input a Fourier transform known coefficient, and a serial/parallel conversion section that forms a sampling signal superimposed on each subcarrier by performing serial/parallel conversion of the output of that FIR filter; a digital signal forming section that obtains a received digital signal from a sampling signal of each subcarrier obtainedby the Fourier transform processing section; a replica signal generation section that generates a replica signal of the sampling signal of each subcarrier from the received digital signal obtained by the digital signal forming section; an error calculation section that calculates an error value of corresponding subcarrier signals between a signal after Fourier transform processing obtained by the Fourier transform processing section and a replica signal; and a correction section that performs adaptive algorithm processing that decreases an error value by adaptively correcting the value of a sampling signal used as FIR filter variable gain according to the error value.

According to this configuration, the Fourier transform processing section can be given a fundamental Fourier transform processing function of converting a sampling signal sampled from a received OFDM signal to a signal superimposed on each subcarrier, and can also be given a function as a filter that eliminates distortion due to peak clipping processing or the like and a noise component that appears as an error value between a replica signal and a signal after Fourier transform processing. Then, by means of adaptive algorithm processing by the correction section, distortion and noise contained in a received OFDM signal can be effectively eliminated by adaptively correcting variable gain (a sampling signal sampled from a received OFDM signal) of an FIR filter of the Fourier transform processing section.

An OFDM receiving apparatus of the present invention has a configuration further comprising a selection section that selects a sampling signal subject to correction and a sampling signal not subject to correction respectively from among sampling signals; wherein a Fourier transform processing section is provided with a first Fourier transform processing section that performs Fourier transform processing on a sampling signal subject to correction, a second Fourier transform processing section that performs Fourier transform processing on a sampling signal not subj ect to correction, and an addition section that adds signals of each subcarrier formed by the first and second Fourier transform processing sections in corresponding subcarrier signals; and the first Fourier transform processing section is provided with an FIR filter that takes a sampling signal subject to correction as variable gain and also has as input a Fourier transform known coefficient, and a serial/parallel conversion section that forms a sampling signal superimposed on each subcarrier by performing serial/parallel conversion of the output of that FIR filter.

According to this configuration, the Fourier transform processing section is divided into first and second Fourier transform processing sections, of which the first Fourier transform processing section that performs Fourier transform processing of sampling signals subject to correction has a configuration comprising an FIR filter, and by performing adaptive filtering using adaptive algorithm processing only on sampling signals subject to correction, it is possible to correct only sampling signals on which distortion or noise is actually superimposed, thereby enabling the amount of computational processing by the adaptive algorithm to be reduced. As a result, distortion or a noise component can be eliminated in a shorter time and more efficiently.

An OFDM receiving apparatus of the present invention has a configuration further comprising a selection section that selects a sampling signal that has undergone peak clipping on the transmitting side and a sampling signal that has not undergone peak clipping respectively from among sampling signals; wherein a Fourier transform processing section is provided with a first Fourier transform processing section that performs Fourier transform processing on a sampling signal that has undergone peak clipping, a second Fourier transform processing section that performs Fourier transform processing on a sampling signal that has not undergone peak clipping, and an addition section that adds signals of each subcarrier formed by the first and second Fourier transform processing sections in corresponding subcarrier signals; and the first Fourier transform processing section is provided with an FIR filter that takes a sampling signal that has undergone peak clipping as variable gain and also has as input a Fourier transform known coefficient, and a serial/parallel conversion section that forms a sampling signal superimposed on each subcarrier by performing serial/parallel conversion of the output of that FIR filter.

According to this configuration, the Fourier transform processing section is divided into first and second Fourier transform processing sections, of which the first Fourier transform processing section that performs Fourier transform processing of sampling signals that have undergone peak clipping has a configuration comprising an FIR filter, and by performing adaptive filtering using adaptive algorithm processing only on sampling signals that have undergone peak clipping, it is possible to correct only sampling signals on which a distortion component due to peak clipping is actually superimposed, thereby enabling the amount of computational processing by the adaptive algorithm to be reduced. As a result, a distortion component due to peak clipping can be eliminated in a shorter time and more efficiently.

An OFDM receiving apparatus of the present invention has a configuration wherein a selection section compares each sampling signal with a predetermined threshold value, and selects a sampling signal greater than or equal to the thresholdvalue as a sampling signal that has undergone peak clipping.

According to this configuration, sampling signals that have undergone peak clipping can be selected comparatively simply.

An OFDM receiving apparatus of the present invention has a configuration wherein a selection section comprises a Fourier transform processing section that executes Fourier transform processing on a sampling signal, a provisional decision section that makes a provisional decision on data after Fourier transform processing, an inverse Fourier transform processing section that regenerates a transmit waveform by executing inverse Fouriertransform processing on provisionaldecision data obtained by that provisional decision section, and a selection section that selects a sampling signal greater than or equal to a predetermined threshold value within the regenerated waveform as a sampling signal that has undergone peak clipping.

According to this configuration, a transmit waveform is regenerated from provisionally decided provisional decision data, and sampling signals that have undergone peak clipping are estimated and selected based on sampling signals of the regenerated waveform, thereby enabling sampling signals that have undergone peak clipping to be selected with good precision.

An OFDM receiving apparatus of the present invention has a configuration wherein the aforementioned threshold value is set as a value smaller than the threshold value used for peak clipping on the transmitting side.

According to this configuration, sampling signals that have undergone peak clipping can be selected without any being missed.

An OFDM receiving apparatus of the present invention has a configuration wherein a correction section, in adaptively correcting the value of a sampling signal in accordance with an adaptive algorithm, corrects only the amplitude component and not the phase component of that sampling signal.

According to this configuration, since the occurrence of actual error (distortion) in a received signal due to peak clipping processing on the transmitting side applies only to the phase component of a sampling signal, by correcting only the phase component it is possible for only distortion due to peak clipping to be eliminated effectively with a small number of adaptive algorithm computations.

An OFDM receiving apparatus of the present invention has a configuration wherein, when the real part of a pre-correction sampling signal is designated A and the imaginary part B, the vector is represented by complex number A+jB and the phase of that complex number is designated a, and also the real part of a correction vector for correcting this sampling signal is designated C and the imaginary part D, the vector is represented by complex number C+jD and the phase of that complex number is designated c, a correction section finds real part I and imaginary part Q of the post-correction sampling signal from the following equations:

$$I = A + \mathrm{sqrt}\,(C^2 + D^2) \times \cos\,(c\text{-}a) \times \cos\,(a)$$

$$Q = B + \mathrm{sqrt}\,(C^2 + D^2) \times \cos\,(c\text{-}a) \times \sin\,(a)$$

where sqrt ( ) indicates the square root of ( ).

According to this configuration, real part I and imaginary part Q of a post-correction sampling signal are found based on sampling signal amplitude direction component $F = \mathrm{sqrt}\,(C^2 + D^2) \times \cos\,(c\text{-}a)$ in a correction vector, making it possible to perform satisfactorily computation to which is attached the condition that only the amplitude component is to be corrected in an adaptive algorithm.

An OFDM receiving apparatus of the present invention has a configuration wherein, when the real part of a pre-correction sampling signal is designated A and the imaginary part B, the vector is represented by complex number A+jB and the phase of that complex number is designated a, and also the real part of a correction vector for correcting this sampling signal is designated C and the imaginary part D, the vector is represented by complex number C+jD and the phase of that complex number is designated c, a correction section finds real part I and imaginary part Q of the post-correction sampling signal from the following equations:

$$I = \text{sqrt} ((A+C)^2+(B+D)^2) \times \cos (a)$$

$$Q = \text{sqrt} ((A+C)^2+(B+D)^2) \times \sin (a)$$

where sqrt( ) indicates the square root of ( ).

According to this configuration, real part I and imaginary part Q of a post-correction sampling signal are found based on post-correction vector length $\text{sqrt} ((A+C)^2+(B+D)^2)$ after correction of a sampling signal vector by a correction vector, making it possible to perform satisfactorily computation to which is attached the condition that only the amplitude component is to be corrected in an adaptive algorithm.

An OFDM receiving apparatus of the present invention has a configuration wherein a correction section, in adaptively correcting the value of a sampling signal in accordance with an adaptive algorithm, corrects the phase component of the sampling signal after correcting only the amplitude component of the sampling signal.

According to this configuration, when there is fluctuation in the phase direction in addition to error due to amplitude direction distortion caused by peak clipping, this phase direction fluctuation can also be corrected effectively. Specifically, when only the amplitude component of a sampling signal is first corrected, phase error arising due to propagation path fluctuations remains unchanged, and thus the absolute value of the error increases to the extent that the amplitude increases. By next performing phase direction correction to correct that error, it is possible to correct effectively the phase direction fluctuation component increased by increasing the amplitude.

An OFDM receiving apparatus of the present invention has a configuration further comprising a path compensation section that compensates for fluctuations due to received OFDM multipath propagation, wherein a Fourier transform processing section takes a sampling signal compensated by that path compensation section as FIR filter variable gain.

According to this configuration, it is possible to improve the precision of correction in a multipath environment.

An OFDM receiving apparatus of the present invention has a configuration wherein a path compensation section comprises a Fourier transform processing section that extracts a sampling signal superimposed on each subcarrier by executing Fourier transform processing on a sampling signal sampled from a received OFDM signal, a frequency axis equalization section that executes frequency axis equalization processing on the sampling signal of each subcarrier, and an inverse Fourier transform processing section that executes inverse Fourier transform processing on the sampling signal of each subcarrier on which frequency axis equalization processing has been executed; and wherein a sampling signal after inverse Fourier transform processing is output as FIR filter variable gain.

According to this configuration, amplitude and phase fluctuations due to multipath propagation are eliminated on a subcarrier-by-subcarrier basis by means of frequency axis equalization and a single-path signal is formed, and correction processing is performed on this single-path signal by a Fourier transform processing section, digital signal forming section, replica signal generation section, error calculation section, and correction section, making it possible to improve the precision of correction in a multipath environment.

An OFDM receiving apparatus of the present invention has a configuration further comprising a fluctuation detection section that detects fluctuations of each subcarrier signal due to multipath propagation from a received OFDM signal, and a selection section that selects a subcarrier signal to be corrected based on that detection result.

According to this configuration, in comparison with the case where signals of all subcarriers are made subject to correction, it is possible for only subcarrier signals actually suitable for correction to be selected as subject to correction, enabling correction precision to be improved significantly.

An OFDM receiving apparatus of the present invention has a configuration wherein a fluctuation detection section detects the reception power of each subcarrier, and a selection section selects only a predetermined number of subcarrier signals from the highest reception power.

An OFDM receiving apparatus of the present invention has a configuration wherein a fluctuation detection section detects the reception SN ratio of each subcarrier, and a selection section selects only a predetermined number of subcarrier signals with the largest reception SN ratios.

According to these configurations, it is possible to perform correction without using subcarriers that have slumped dueto multipath propagation, enabling correction precision to be improved significantly.

An OFDM signal correction method of the present invention comprises a Fourier transform processing step of executing Fourier transform processing on a received OFDM signal by taking a sampling signal sampled from the received OFDM signal as variable gain and also performing FIR filter computation with a Fourier transform known coefficient as input, a digital signal forming step of obtaining a received digital signal from a sampling signal corresponding to each subcarrier obtained by the Fourier transform processing step, a replica signal generating step of generating a replica signal of the sampling signal of each subcarrier from the received digital signal obtained by the digital signal forming step, an error calculating step of calculating an error value of corresponding subcarrier signals between a signal after Fourier transform processing obtained by the Fourier transform processing step and a replica signal, and an adaptive algorithm processing step of decreasing an error value by adaptively correcting the value of a sampling signal of a receivedOFDM signal used as FIR filter variable gain according to the error value.

According to this method, in the Fourier transform processing step it is possible to perform fundamental Fourier transform processing of converting a sampling signal sampled from a received OFDM signal to a signal superimposed on each subcarrier, and also to provide a function as a filter that eliminates distortion and a noise component that appear as an error value between a replica signal and a signal after Fourier transform processing. Then, in the adaptive algorithm processing step, distortion and a noise component can be effectively eliminated by adaptively correcting variable gain (a sampling signal sampled from a received OFDM signal) used in the Fourier transform processing step.

An OFDM signal correction method of the present invention further includes a selecting step of selecting sampling signals subject to correction and sampling signals not subject to correction respectively from sampling signals sampled from a received OFDM signal; and in a Fourier transformprocessing step, for a sampling signal taken as subject to correction, takes that sampling signal as variable gain and performs FIR filter computation with a Fourier transform known coefficient as input, and for a sampling signal not subject to correction performs Fourier transform processing with the value of that sampling signal taken as 0, and adds and outputs the signal after FIR filter computation and the signal after Fourier transform processing.

According to this method, it is possible to perform adaptive filtering using adaptive algorithm processing only on sampling signals subject to correction, and to correct only sampling signals on which distortion or a noise component is actually superimposed, thereby enabling the amount of computational processing by the adaptive algorithm to be reduced. As a result, distortion or a noise component can be eliminated in a shorter time and more efficiently.

An OFDM signal correction method of the present invention further comprises a path compensating step of compensating for fluctuations due to received OFDM multipath propagation, and a sampling signal compensated by that path compensating step is taken as FIR filter computation variable gain in a Fourier transform processing step.

According to this configuration, it is possible to improve the precision of correction in a multipath environment.

This application is based on Japanese Patent Application No.2002-180204 filed on June 20, 2002, and Japanese Patent Application No.2003-001438 filed on January 7, 2003, entire content of which is expressly incorporated by reference herein.

Industrial Applicability

The present invention is applicable to an OFDM receiving apparatus that corrects distortion of an OFDM signal on which peak clipping processing has been executed at the time of transmission, for example.

**Claims**

**1.** An OFDM receiving apparatus comprising:

   a Fourier transform processing section provided with an FIR filter that takes a sampling signal sampled from a received OFDM signal as variable gain and also has as input a Fourier transform known coefficient, and a serial/parallel conversion section that forms a sampling signal superimposed on each subcarrier by performing serial/parallel conversion of output of that FIR filter;
   a digital signal forming section that obtains a received digital signal from a sampling signal of each subcarrier obtained by said Fourier transform processing section;
   a replica signal generation section that generates a replica signal of a sampling signal of each subcarrier from a received digital signal obtained by said digital signal forming section;
   an error calculation section that calculates an error value of corresponding subcarrier signals between a signal after Fourier transform processing obtained by said Fourier transform processing section and said replica signal; and
   a correction section that performs adaptive algorithm processing that decreases an error value by adaptively correcting a value of a sampling signal used as variable gain of said FIR filter according to said error value.

**2.** The OFDM receiving apparatus according to claim 1, further comprising a selection section that selects a sampling signal subject to correction and a sampling signal not subject to correction respectively from among said sampling signals, wherein:

said Fourier transform processing section is provided with a first Fourier transform processing section that performs Fourier transform processing on said sampling signal subject to correction, a second Fourier transform processing section that performs Fourier transform processing on said sampling signal not subject to correction, and an addition section that adds signals of each subcarrier formed by said first and second Fourier transform processing sections in corresponding subcarrier signals; and

said first Fourier transform processing section is providedwith an FIR filter that takes said sampling signal subject to correction as variable gain and also has as input a Fourier transform known coefficient, and a serial/parallel conversion section that forms a sampling signal superimposed on each subcarrier by performing serial/parallel conversion of output of that FIR filter.

3. The OFDM receiving apparatus according to claim 1, further comprising a selection section that selects a sampling signal that has undergone peak clipping on a transmitting side and a sampling signal that has not undergone peak clipping respectively from among said sampling signals, wherein:

said Fourier transform processing section is provided with a first Fourier transform processing section that performs Fourier transform processing on a sampling signal that has undergone peak clipping, a second Fourier trans form processing section that performs Fourier transform processing on a sampling signal that has not undergone peak clipping, and an addition section that adds signals of each subcarrier formed by said first and second Fourier transform processing sections in corresponding subcarrier signals; and

said first Fourier transform processing section is provided with an FIR filter that takes a sampling signal that has undergone peak clipping as variable gain and also has as input a Fourier transform known coefficient, and a serial/parallel conversion section that forms a sampling signal superimposed on each subcarrier by performing serial/parallel conversion of output of that FIR filter.

4. The OFDM receiving apparatus according to claim 3, wherein said selection section compares each sampling signal with a predetermined threshold value, and selects a sampling signal greater than or equal to said threshold value as a sampling signal that has undergone peak clipping.

5. The OFDM receiving apparatus according to claim 3, wherein said selection section comprises:

a Fourier transform processing section that executes Fourier transform processing on said sampling signal; a provisional decision section that makes a provisional decision on data after Fourier transform processing; an inverse Fourier transform processing section that regenerates a transmit waveform by executing inverse Fourier transform processing on provisional decision data obtained by that provisional decision section; and a selection section that selects a sampling signal greater than or equal to a predetermined threshold value within a regenerated waveform as a sampling signal that has undergone peak clipping.

6. The OFDM receiving apparatus according to claim 4, wherein said threshold value is set as a value smaller than a threshold value used for peak clipping on a transmitting side.

7. The OFDM receiving apparatus according to claim 5, wherein said threshold value is set as a value smaller than a threshold value used for peak clipping on a transmitting side.

8. The OFDM receiving apparatus according to claim 1, whereinsaidcorrectionsection,inadaptively correcting a value of said sampling signal in accordance with an adaptive algorithm, corrects only an amplitude component and not a phase component of that sampling signal.

9. The OFDM receiving apparatus according to claim 8, wherein, when a real part of a pre-correction sampling signal is designated A and an imaginary part B, a vector is represented by complex number A+jB and a phase of that complex number is designated a, and also a real part of a correction vector for correcting this sampling signal is designated C and an imaginary part D, a vector is represented by complex number C+jD and a phase of that complex number is designated c, said correction section finds real part I and imaginary part Q of a post-correction sampling signal from the following equations:

$$I = A + \mathrm{sqrt}\,(C^2 + D^2) \times \cos\,(c\text{-}a) \times \cos\,(a)$$

$$Q = B + \text{sqrt} (C^2 + D^2) \times \cos (c-a) \times \sin (a)$$

where sqrt ( ) indicates a square root of ( ).

10. The OFDM receiving apparatus according to claim 8, wherein, when a real part of a pre-correction sampling signal is designated A and an imaginary part B, a vector is represented by complex number A+jB and a phase of that complex number is designated a, and also a real part of a correction vector for correcting this sampling signal is designated C and an imaginary part D, a vector is represented by complex number C+jD and a phase of that complex number is designated c, said correction section finds real part I and imaginary part Q of a post-correction sampling signal from the following equations:

$$I = \text{sqrt} ((A+C)^2 + (B+D)^2) \times \cos (a)$$

$$Q = \text{sqrt} ((A+C)^2 + (B+D)^2) \times \sin (a)$$

where sqrt ( ) indicates a square root of ( ).

11. The OFDM receiving apparatus according to claim 1, wherein said correction section, in adaptively correcting a value of said sampling signal in accordance with an adaptive algorithm, corrects a phase component of said sampling signal after correcting only an amplitude component of said sampling signal.

12. The OFDM receiving apparatus according to claim 1, further comprising a path compensation section that compensates for fluctuations due to multipath propagation of said received OFDM signal;
wherein said Fourier transform processing section takes a sampling signal compensated by that path compensation section as variable gain of said FIR filter.

13. The OFDM receiving apparatus according to claim 12, wherein said path compensation section comprises:

a Fourier transform processing section that extracts a sampling signal superimposed on each subcarrier by executing Fourier transform processing on a sampling signal sampled from said received OFDM signal;
a frequency axis equalization section that executes frequency axis equalization processing on a sampling signal of said each subcarrier; and
an inverse Fourier transform processing section that executes inverse Fourier transform processing on a sampling signal of each subcarrier on which frequency axis equalization processing has been executed;
and outputs a sampling signal after inverse Fourier transform processing as variable gain of said FIR filter.

14. The OFDM receiving apparatus according to claim 12, further comprising:

a fluctuation detection section that detects fluctuations of each subcarrier signal due to multipath propagation from a received OFDM signal; and
a selection section that selects a subcarrier signal to be corrected based on that detection result.

15. The OFDM receiving apparatus according to claim 14, wherein:

said fluctuation detection section detects reception power of each subcarrier; and
said selection section selects only a predetermined number of subcarrier signals from highest reception power.

16. The OFDM receiving apparatus according to claim 14, wherein:

said fluctuation detection section detects a reception SN ratio of each subcarrier; and
said selection section selects only a predetermined number of subcarrier signals with largest reception SN ratios.

17. An OFDM signal correction method comprising:

a Fourier transform processing step of executing Fourier transform processing on a received OFDM signal by taking a sampling signal sampled from said received OFDM signal as variable gain and also performing FIR filter computation with a Fourier transform known coefficient as input;

a digital signal forming step of obtaining a received digital signal from a sampling signal corresponding to each subcarrier obtained by said Fourier transform processing step;

a replica signal generating step of generating a replica signal of a sampling signal of each subcarrier from a received digital signal obtained by said digital signal forming step;

an error calculating step of calculating an error value of corresponding subcarrier signals between a signal after Fourier transform processing obtained by said Fourier transform processing step and said replica signal; and

an adaptive algorithm processing step of decreasing said error value by adaptively correcting a value of a sampling signal of a received OFDM signal used as variable gain of said FIR filter according to said error value.

18. The OFDM signal correction method according to claim 17, further comprising a selecting step of selecting sampling signals subject to correction and sampling signals not subject to correction respectively from sampling signals sampled from a received OFDM signal;

wherein, in said Fourier transform processing step, for a sampling signal taken as subject to correction, that sampling signal is taken as variable gain and FIR filter computation is performed with a Fourier transform known coefficient as input, and for a sampling signal not subject to correction Fourier transform processing is performed with the value of that sampling signal taken as 0, and a signal after FIR filter computation and a signal after Fourier transform processing are added and output.

19. The OFDM signal correction method according to claim 18, further comprising a path compensating step of compensating for fluctuations due to multipath propagation of said received OFDM signal;

wherein, in said Fourier transform processing step, a sampling signal compensated by that path compensating step is taken as variable gain of said FIR filter computation.

FIG.1 A

FIG.1 B

(PRIOR ART)

FIG.2 (PRIOR ART)

FIG.3    (PRIOR ART)

HARD DECISION VALUES OF EACH SUBCARRIER — $f(i,0)$, $f(i,1)$, $f(i,2)$, $f(i,3)$, $f(i,4)$, $f(i,5)$, $f(i,6)$, $f(i,7)$

102 DEC

SIGNALS AFTER SYNCHRONOUS DETECTION OF EACH SUBCARRIER — $d(i,0)$, $d(i,1)$, $d(i,2)$, $d(i,3)$, $d(i,4)$, $d(i,5)$, $d(i,6)$, $d(i,7)$

101 DEM

SIGNALS OF EACH SUBCARRIER ON FREQUENCY AXIS — $s(i,0)$, $s(i,1)$, $s(i,2)$, $s(i,3)$, $s(i,4)$, $s(i,5)$, $s(i,6)$, $s(i,7)$

100 FFT

RECEPTION TIME WAVEFORM — $r(i,0)$, $r(i,1)$, $r(i,2)$, $r(i,3)$, $r(i,4)$, $r(i,5)$, $r(i,6)$, $r(i,7)$

FIG.4

FIG.5

FIG.6

400 FIR FILTER

INPUT = w( m MOD 2, (int)(m/2) )

401

DELAY

402

r(i,1) ——→ ⊗

403

r(i,0) ——→ ⊗

404

⊕

m=0···15

m=even  405

t(i,(int)(m/2) )

m=odd

FIG.7

EP 1 515 468 A1

FIG.8

FIG.9

START OF RECEPTION PROCESSING — S0

PER-SUBCARRIER CHANNEL ESTIMATION FOR SYNCHRONOUS DETECTION AND REPLICA GENERATION — S1

FFT OF ONLY NON-PEAK-CLIPPED SAMPLING SIGNALS OUTPUT $U(i,p)$ $(p = 0...7)$ — S2

$m = 0$ — S3

$k = 0$ — S4

FIR FILTER COMPUTATION — S5

FILTER OUTPUT S/P CONVERSION OUTPUT $T(i,q,m)$ $(q = 0...7)$ — S6

$V(i,k,m) = T(i,k,m) + U(i,k)$ — S7

SYNCHRONOUS DETECTION OUTPUT $D(i,k,m)$ — S8

HARD DECISION OUTPUT $F(i,k,m)$ — S9

S10 — $k < 8$? — Yes / No

S11 — $k = k+1$

S12 — $k = 0$, $m = m+1$

S13 — $m < Mmax$? — No / Yes

REPLICA GENERATION, OUTPUT $X(i,k,m)$ — S14

$E(i,k,m) = X(i,k,m) - V(i,k,m)$ — S15

UPDATE $R(i,j,m)$ WITH ADAPTIVE ALGORITHM (j IS ESTIMATED SAMPLE SIGNAL) — S16

END OF RECEPTION PROCESSING — S17

FIG.10

FIG.11

EP 1 515 468 A1

FIG.12

FIG.13

FIG.14

EP 1 515 468 A1

FIG.15

FIG.16

FIG.17

FIG.18

EP 1 515 468 A1

FIG.19

FIG.20

FIG.21

r(i,0) r(i,1) r(i,2) r(i,3) r(i,4) r(i,5) r(i,6) r(i,7)

OWN SIGNAL ○ ○ ○ ○ ○ ○ ○ ○

OTHER USER.S SIGNAL ● ● ● ● ● ●

CORRECTION RANGE

**FIG.22**

r(i,0) r(i,1) r(i,2) r(i,3) r(i,4) r(i,5) r(i,6) r(i,7)

OUTBOUND SIGNAL ○ ○ ○ ○ ○ ○ ○ ○

INBOUND SIGNAL ● ● ● ● ● ●

CORRECTION RANGE

**FIG.23**

r(i,0) r(i,1) r(i,2) r(i,3) r(i,4) r(i,5) r(i,6) r(i,7)

OWN SIGNAL ○ ○ ○ ○ ○ ○ ○ ○

INTERFERENCE SIGNAL ●

CORRECTION RANGE

**FIG.24**

r(i,0) r(i,1) r(i,2) r(i,3) r(i,4) r(i,5) r(i,6) r(i,7)

(a)

OWN SIGNAL    O    O    O    O    O    O    O    O

NOISE    N1   N2   N3   N4   N5   N6   N7   N8

(b) INTERFERENCE MAGNITUDE    $r(i,0) > r(i,2) > r(i,1) > r(i,3) > r(i,6) > r(i,4) > r(i,7) > r(i,5)$

FIG.25

STEP 1    r(i,0) r(i,1) r(i,2) r(i,3) r(i,4) r(i,5) r(i,6) r(i,7)

OWN SIGNAL    O    O    O    O    O    O    O    O

NOISE    N1    N2    N3    N4    N5    N6    N7    N8
              ↑
         CORRECTION

STEP 2    r(i,0) r(i,1) r(i,2) r(i,3) r(i,4) r(i,5) r(i,6) r(i,7)

OWN SIGNAL    O    O    O    O    O    O    O    O

NOISE         N2    N3    N4    N5    N6    N7    N8
                   ↑
              CORRECTION

STEP 3    r(i,0) r(i,1) r(i,2) r(i,3) r(i,4) r(i,5) r(i,6) r(i,7)

OWN SIGNAL    O    O    O    O    O    O    O    O

NOISE         N2         N4    N5    N6    N7    N8
                   ↑
              CORRECTION

STEP 4    r(i,0) r(i,1) r(i,2) r(i,3) r(i,4) r(i,5) r(i,6) r(i,7)

OWN SIGNAL    O    O    O    O    O    O    O    O

NOISE                    N4    N5    N6    N7    N8
                              ↑
                         CORRECTION

STEP 5    r(i,0) r(i,1) r(i,2) r(i,3) r(i,4) r(i,5) r(i,6) r(i,7)

OWN SIGNAL    O    O    O    O    O    O    O    O

NOISE                         N5    N6    N7    N8
                                         ↑
                                    CORRECTION

FIG.26

## INTERNATIONAL SEARCH REPORT

International application No.

PCT/JP03/07707

### A. CLASSIFICATION OF SUBJECT MATTER
Int.Cl⁷ H04J11/00

According to International Patent Classification (IPC) or to both national classification and IPC

### B. FIELDS SEARCHED
Minimum documentation searched (classification system followed by classification symbols)
Int.Cl⁷ H04J11/00

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 10-126374 A (Toshiba Corp.), 15 May, 1998 (15.05.98), Full text; all drawings & WO 99/12294 A1 & EP 0942547 A1 | 1–19 |
| A | JP 8-340315 A (Philips Electronics N.V.), 24 December, 1996 (24.12.96), Page 6, left column, line 42 to right column, line 19; Fig. 8 & EP 734133 A1 & FR 2732178 A1 & US 5796814 A & LI 117578 A | 1–19 |

☐ Further documents are listed in the continuation of Box C.　　☐ See patent family annex.

| | |
|---|---|
| *　　Special categories of cited documents:<br>"A"　document defining the general state of the art which is not considered to be of particular relevance<br>"E"　earlier document but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| 11 September, 2003 (11.09.03) | 30 September, 2003 (30.09.03) |

| Name and mailing address of the ISA/<br>　Japanese Patent Office | Authorized officer |
|---|---|
| Facsimile No. | Telephone No. |

Form PCT/ISA/210 (second sheet) (July 1998)